# FASCICULE DE BREVET EUROPEEN

(11) **EP 3 219 077 B1**
(45) Date de publication et mention de la délivrance du brevet: **19.05.2021**
(21) Numéro de dépôt: 15801900.0
(22) Date de dépôt: 06.11.2015
(51) Int. Cl.: H04L 29/06, H04L 29/08

(54) **PROCÉDÉ ET SYSTÈME DE GESTION D'IDENTITÉS D'UTILISATEURS DESTINÉ À ÊTRE MIS EN OEUVRE LORS D'UNE COMMUNICATION ENTRE DEUX NAVIGATEURS WEB**
VERFAHREN UND SYSTEM ZUR VERWALTUNG VON BENUTZERIDENTITÄTEN, DIE WÄHREND DER KOMMUNIKATION ZWISCHEN ZWEI WEBBROWSERN IMPLEMENTIERT WERDEN SOLLEN
METHOD AND SYSTEM FOR MANAGING USER IDENTITIES INTENDED TO BE IMPLEMENTED DURING COMMUNICATION BETWEEN TWO WEB BROWSERS

(30) Priorité: 10.11.2014 FR 1460863
(43) Date de publication de la demande: 20.09.2017
(73) Titulaire: ORANGE, 75015 Paris (FR)
(72) Inventeur: BELTRAN, Victoria, E-30003 Murcia (ES); BERTIN, Emmanuel, F-14530 Luc sur Mer (FR)
(86) Numéro de dépôt international: PCT/FR2015/053005
(87) Numéro de publication internationale: WO 2016/075395

(56) Documents cités:
- BELTRAN VICTORIA ET AL: "User Identity for WebRTC Services: A Matter of Trust", IEEE INTERNET COMPUTING, IEEE SERVICE CENTER, NEW YORK, NY.- INSTITUTE OF ELECTRICAL AND ELECTRONICS ENGINEERS, US, vol. 18, no. 6, 1 novembre 2014 (2014-11-01), pages 18-25, XP011562860, ISSN: 1089-7801, DOI: 10.1109/MIC.2014.128 [extrait le 2014-10-29]
- PETERSON NEUSTAR J: "Enhancements for Authenticated Identity Management in the Session Initiation Protocol (SIP) draft-peterson-sip-identity-01; draft-peterson-sip-identity-01.txt", 20020701, no. 1, 1 juillet 2002 (2002-07-01), XP015004832, ISSN: 0000-0004
- LI LI ET AL: "Who Is Calling Which Page on the Web?", IEEE INTERNET COMPUTING, IEEE SERVICE CENTER, NEW YORK, NY.- INSTITUTE OF ELECTRICAL AND ELECTRONICS ENGINEERS, US, vol. 18, no. 6, 1 novembre 2014 (2014-11-01), pages 26-33, XP011562871, ISSN: 1089-7801, DOI: 10.1109/MIC.2014.105 [extrait le 2014-10-29]
- RESCORLA RTFM E ET AL: "WebRTC Security Architecture; draft-ietf-rtcweb-security-arch-10.txt", WEBRTC SECURITY ARCHITECTURE; DRAFT-IETF-RTCWEB-SECURITY-ARCH-10.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 4 juillet 2014 (2014-07-04), pages 1-45, XP015100333,
- JOHNSTON AVAYA P ZIMMERMANN J CALLAS SILENT CIRCLE T CROSS OFFICETONE J YOAKUM AVAYA A: "Using ZRTP to Secure WebRTC; draft-johnston-rtcweb-zrtp-01.txt", USING ZRTP TO SECURE WEBRTC; DRAFT-JOHNSTON-RTCWEB-ZRTP-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 3 avril 2014 (2014-04-03), pages 1-11, XP015098527, [extrait le 2014-04-03]
- FISCHL SKYPE J ET AL: "Framework for Establishing a Secure Real-time Transport Protocol (SRTP) Security Context Using Datagram Transport Layer Security (DTLS); rfc5763.txt", FRAMEWORK FOR ESTABLISHING A SECURE REAL-TIME TRANSPORT PROTOCOL (SRTP) SECURITY CONTEXT USING DATAGRAM TRANSPORT LAYER SECURITY (DTLS); RFC5763.TXT, INTERNET ENGINEERING TASK FORCE, IETF; STANDARD, INTERNET SOCIETY (ISOC) 4, RUE DES FALAISES CH- 120, 11 mai 2010 (2010-05-11), pages 1-37, XP015070794, [extrait le 2010-05-11]

## Description

### Arrière-plan de l'invention

L'invention se rapporte au domaine général des télécommunications.

Elle concerne plus particulièrement le domaine des communications mises en œuvre en temps réel entre deux navigateurs web ou plus, installés sur des terminaux d'utilisateurs.

La technologie WebRTC (Web Real-Time Communication) est un mécanisme développé conjointement au sein du consortium W3C (World Wide Web Consortium) et de l'IETF (Internet Engineering Task Force) s'appuyant sur une interface de programmation (API) JavaScript, et qui permet des communications en temps-réel et directes (pair-à-pair ou « peer-to-peer » en anglais, c'est-à-dire sans passer par un serveur web) entre plusieurs navigateurs. Ces communications peuvent être de nature quelconque, i.e. de type audio, vidéo, données, etc.

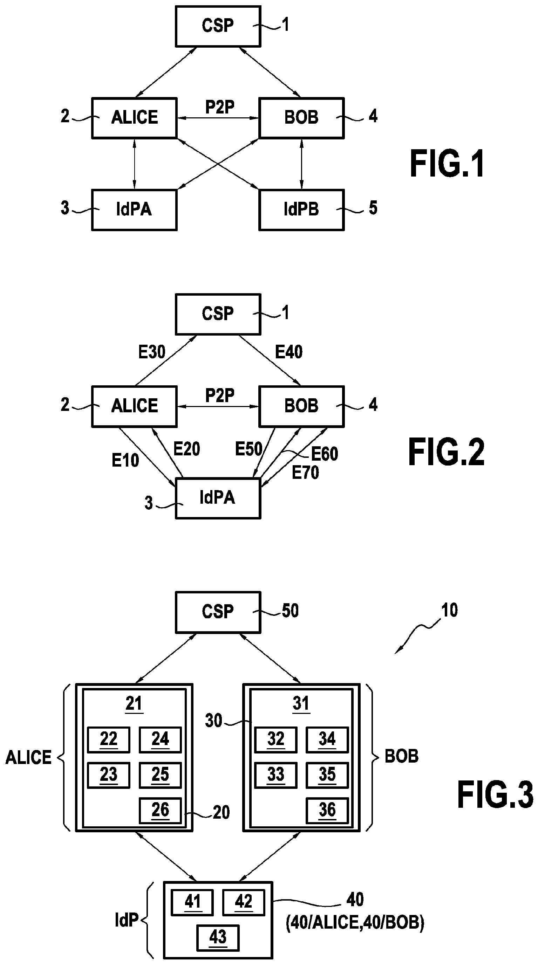

Dans ce contexte, les utilisateurs participant à une même communication doivent au préalable pouvoir s'authentifier entre eux de manière certaine. A cet effet, un mécanisme de transport des identités des utilisateurs a été défini par l'IETF. Ce mécanisme s'appuie sur l'architecture illustrée à la **figure 1** et son principe de fonctionnement est le suivant.

On considère en préalable que deux utilisateurs Alice et Bob sont connectés, via une liaison sécurisée, à un fournisseur de communications WebRTC 1 (typiquement un serveur web).

Pour établir une communication avec Bob, Alice (désigné aussi par « premier utilisateur » ci-après) s'identifie et s'authentifie par l'intermédiaire du navigateur web de son terminal 2 auprès d'un fournisseur d'identités (ou IdP pour Identity Provider) 3. Le fournisseur d'identités 3 envoie en réponse au navigateur web d'Alice un certificat d'identité ou plus généralement une preuve d'authentification d'Alice.

Le navigateur web d'Alice transmet ce certificat dans un message de signalisation au navigateur web du terminal 4 de Bob (désigné par « deuxième utilisateur »).

Ce message de signalisation transite par le fournisseur de communications WebRTC 1.

Le certificat d'identité inclus dans le message de signalisation permet alors à Bob de vérifier et/ou d'obtenir l'identité d'Alice auprès du fournisseur d'identités 3. L'identité d'Alice est par exemple une adresse mél, un numéro de téléphone, une adresse IP (Internet Protocol), etc.

Le même principe est appliqué pour permettre à Alice de vérifier et/ou d'obtenir l'identité de Bob auprès d'un fournisseur d'identités 5 (qui peut être le même que le fournisseur d'identités 3).

Pour mettre en œuvre ce mécanisme général, l'IETF collabore avec le W3C sur la définition et la standardisation de trois aspects majeurs :
- l'information précise contenue dans le message de signalisation qui doit être « cryptographiquement » liée à l'identité du premier utilisateur, et un mécanisme permettant aux messages échangés (conformes au protocole JSEP (Javascript Session Establishment Protocol) dans le cas de WebRTC) de porter les certificats d'identité ;
- l'interface des fournisseurs d'identités ; et
- l'interface (Javascript dans le cas de WebRTC) que l'API téléchargée par le navigateur web du premier utilisateur peut utiliser pour demander au fournisseur d'identité de générer des certificats et de les vérifier.

Les deux premiers aspects sont définis dans le document de spécification de l'IETF intitulé « WebRTC Security Architecture - draft-ietf-rtcweb-security-arch-10 », 4 juillet 2014, disponible sur le site internet http://tools.ietf.org/id/draft-ietf-rtcweb-security-arch-10.html. Le troisième aspect est défini dans le document de spécification de l'API WebRTC par le W3C intitulé « WebRTC 1.0: Real-time Communication Between Browsers », 17 juin 2014, disponible sur le site internet http://dev.w3.ora/2011/webrtc/editor/archives/20140617/webrtc.html.

Le document de V. Beltran et al. Intitulé « User Identity for WebRTC Services : a matter of trust », IEEE Internet Computing, vol. 18, n°6, novembre 2014, présente différents modèles permettant de fournir l'identité d'un utilisateur et leur impact en termes de confidentialité.

Le document de J. Peterson Neustar, intitule "Enhancements for Authenticated Identity Management in the Session Initiation Protocol (SIP)", 1er juillet 2002, fournit des recommandations et des conventions pour authentifier des utilisateurs et propose une manière de distribuer des identités authentifiées et sécurisées dans des messages SIP.

Deux catégories de protocoles d'authentification unique (ou SSO pour « Single Sign On » en anglais) sont aujourd'hui envisagés dans le contexte WebRTC pour permettre l'échange des identités entre les utilisateurs participant à une communication, à savoir :
- une première catégorie de protocoles qui s'appuient sur un mécanisme de pré-autorisation : le premier utilisateur (Alice) reçoit de son fournisseur d'identités un code d'autorisation qu'il envoie au deuxième utilisateur (Bob). Bob utilise ce code d'autorisation pour accéder à l'identité d'Alice auprès de son fournisseur d'identités ; et
- une seconde catégorie de protocoles qui s'appuient sur une fourniture immédiate de l'identité de l'utilisateur : le fournisseur d'identités du premier utilisateur Alice lui transmet un certificat d'identité qu'il envoie au deuxième utilisateur Bob avec l'identité correspondante.

L'IETF considère plus particulièrement le protocole OAuth2.0 pour la première catégorie de protocoles et le protocole BrowserID pour la seconde catégorie de protocoles.

La **figure 2** montre schématiquement la façon dont l'IETF envisage aujourd'hui l'application du protocole OAuth2.0 dans le contexte WebRTC. Par souci de simplification, les mêmes références qu'à la figure 1 sont utilisées et seul le fournisseur d'identités 3 d'Alice est représenté.

Selon l'adaptation du protocole OAuth2.0 envisagée par l'IETF, lorsque Alice souhaite appeler Bob par l'intermédiaire du navigateur web de son terminal 2, elle s'authentifie dans un premier temps auprès de son fournisseur d'identités 3 de façon classique (par exemple avec un login et un mot de passe, ou une empreinte digitale, etc.) (étape E10). De plus, lors de l'étape E10, le terminal 2 envoie au fournisseur d'identités 3 une empreinte numérique. Cette empreinte est une information numérique identifiant de manière unique l'appel entre Alice et Bob, telle que par exemple une partie de la paire de clés asymétriques utilisée par Alice pour communiquer lors de cet appel avec Bob en connexion pair-à-pair, etc.

Le fournisseur d'identités 3 authentifie Alice et fournit le cas échéant, en réponse à cette authentification, un code (ou ticket) d'autorisation au navigateur web d'Alice (étape E20). Ce code d'autorisation est une preuve de l'authentification d'Alice par le fournisseur d'identités IdPA.

Le navigateur web d'Alice inclut le code d'autorisation reçu du fournisseur d'identités 3 ainsi que son empreinte dans sa requête d'appel à destination du navigateur web du terminal 4 de Bob (étape E30). Cette requête d'appel transite par le serveur web 1 du fournisseur de communications WebRTC (étape E40).

Sur réception de la requête d'appel d'Alice, le navigateur web de Bob envoie le code d'autorisation inclus dans la requête d'appel au fournisseur d'identités 3 d'Alice (étape E50). Il reçoit en retour un jeton (ou « token ») d'accès (étape E60) qui lui permet d'accéder auprès du fournisseur d'identités 3 à l'identité d'Alice et à son empreinte (étape E70).

Ainsi, selon cette approche proposée par l'IETF, le code d'autorisation est envoyé « en clair » par Alice dans le message de signalisation à Bob. En outre, ce message de signalisation transite, comme mentionné précédemment, par le serveur web du fournisseur de communications 1. De ce fait, un tiers (pouvant être le fournisseur de communications WebRTC lui-même) peut sans difficulté majeure intercepter le code d'autorisation transmis par Alice à Bob et l'utiliser auprès du fournisseur d'identités 3 d'Alice pour obtenir son identité. Le fournisseur d'identités d'Alice n'a en effet aucun moyen de vérifier que la personne qui utilise le code d'autorisation a bien été autorisée à le faire par Alice (i.e. délégation d'autorisation par Alice). Il convient de noter qu'outre les problèmes de sécurité en résultant, ceci va à rencontre de la philosophie du protocole OAuth2.0 qui requiert que l'entité qui demande un code d'autorisation soit la même que celle qui demande un jeton d'accès en utilisant le code d'autorisation.

Des problèmes similaires se posent avec l'utilisation du protocole BrowserID. Alice envoie en effet son identité à Bob en clair via une liaison non sécurisée avec celui-ci, avant même d'être sûre qu'aucune attaque de type « attaque de l'homme du milieu » (ou « man-in-the-middle » en anglais) n'est susceptible de compromettre sa communication avec Bob (autrement dit avant les vérifications permettant d'établir une connexion pair-à-pair sécurisée avec Bob). N'importe quel tiers malveillant entre Alice et Bob (voire le fournisseur de communications WebRTC) peut donc obtenir l'identité d'Alice.

Ainsi quel que soit le protocole envisagé, la proposition de l'IETF ne permet pas aujourd'hui de garantir que l'identité d'Alice (respectivement de Bob) est seulement reçue par une personne autorisée par Alice (respectivement par Bob), à savoir Bob.

Il existe donc un besoin d'un mécanisme permettant de garantir un échange sécurisé des identités des utilisateurs qui peut être utilisé pour la mise en œuvre de communications entre navigateurs web, et en particulier dans le contexte WebRTC.

### Objet et résumé de l'invention

L'invention répond notamment à ce besoin en proposant un procédé de gestion d'une identité d'un premier utilisateur, destiné à être mis en œuvre lors d'une communication entre un premier navigateur web installé sur un terminal du premier utilisateur et un deuxième navigateur web installé sur un terminal d'un deuxième utilisateur, le procédé de gestion comprenant :
- une étape d'obtention par le premier utilisateur d'au moins une première donnée caractéristique du deuxième utilisateur, ladite au moins une première donnée caractéristique du deuxième utilisateur étant une clé publique d'une paire de clés publique et secrète attribuée au deuxième utilisateur ;
- une étape d'association d'une identité du premier utilisateur avec ladite au moins une première donnée caractéristique du deuxième utilisateur ; et
- une étape de mise à disposition du deuxième utilisateur de l'identité du premier utilisateur associée à ladite au moins une première donnée caractéristique à condition que le deuxième utilisateur détienne au moins une deuxième donnée correspondant à la première donnée caractéristique du deuxième utilisateur.

L'identité du premier utilisateur peut être de différentes natures. Il peut s'agir par exemple d'une adresse mél, d'un numéro de téléphone, etc., ou plus généralement de tout type d'information permettant au deuxième utilisateur d'identifier de manière non ambiguë son correspondant lors de la communication c'est-à-dire Alice.

Corrélativement, l'invention vise également un système de gestion d'une identité d'un premier utilisateur comprenant une pluralité de modules activés lors d'une communication entre un premier navigateur web installé sur un terminal du premier utilisateur et un deuxième navigateur web installé sur un terminal d'un deuxième utilisateur, ladite pluralité de modules comprenant :
- un module, embarqué dans le terminal du premier utilisateur, d'obtention d'au moins une première donnée caractéristique du deuxième utilisateur, ladite au moins une première donnée caractéristique du deuxième utilisateur étant une clé publique d'une paire de clés publique et secrète attribuée au deuxième utilisateur ;
- un module d'association d'une identité du premier utilisateur avec ladite au moins une première donnée caractéristique du deuxième utilisateur ; et
- un module de mise à disposition du deuxième utilisateur de l'identité du premier utilisateur associée à ladite au moins une première donnée caractéristique à condition que le deuxième utilisateur détienne au moins une deuxième donnée correspondant à la première donnée caractéristique du deuxième utilisateur.

Ce système de gestion selon l'invention peut être intégré dans un seul dispositif (typiquement dans le terminal du premier utilisateur) ou ses modules peuvent être dispatchés sur plusieurs dispositifs distincts (ex. sur le premier terminal et sur une entité de confiance telle un fournisseur d'identités du premier utilisateur), comme détaillé davantage ultérieurement.

Il convient de noter qu'aucune limitation n'est attachée au moment où le procédé de gestion selon l'invention est mis en œuvre lors de la communication entre les navigateurs web. Ainsi, les différentes étapes constituant ce procédé peuvent être mises en oeuvre en préambule de la communication pair-à-pair à proprement parler entre les utilisateurs des navigateurs, ou être mises en œuvre à divers moments de cette communication (certaines étapes en préambule et d'autres au cours de la communication à proprement parler).

Par ailleurs, si le procédé selon l'invention est décrit comme permettant de gérer l'identité d'un utilisateur (« premier utilisateur » au sens de l'invention), il va de soi qu'il s'applique à tous les utilisateurs participant à la communication, i.e. chaque utilisateur (ex. Alice ou Bob) est considéré comme un premier utilisateur au sens de l'invention.

En outre, aucune limitation n'est attachée au nombre d'utilisateurs participant à la communication par le biais de navigateurs web équipant leurs terminaux. Ainsi, si plus de deux utilisateurs participent à la communication, le procédé de gestion selon l'invention est mis en oeuvre entre chacun des utilisateurs participant à la communication.

L'invention permet avantageusement au premier utilisateur (ex. Alice) de lier sa propre identité à une donnée caractérisant le deuxième utilisateur (ex. Bob), autorisant par là-même le deuxième utilisateur à recevoir son identité. Par « donnée caractéristique du deuxième utilisateur », on entend au sens de l'invention une donnée qui est associée ou qui identifie de manière unique et/ou non équivoque (ou encore non ambiguë) le deuxième utilisateur. Il s'agit d'une clé de chiffrement publique d'une paire de clés asymétriques comprenant cette clé publique et une clé secrète attribuée au deuxième utilisateur, ou d'une empreinte d'une telle clé. Il convient de noter que cette paire de clés peut être attribuée à une communication donnée (typiquement, il peut s'agir d'une paire de clés attribuée au deuxième utilisateur pour une communication pair-à-pair avec le premier utilisateur), et varier d'une communication à l'autre.

Aucune limitation n'est toutefois attachée à la nature de la donnée caractéristique utilisée par l'invention dès lors que celle-ci permet de caractériser de manière univoque le deuxième utilisateur afin de pouvoir s'assurer que celui-ci a bien été autorisé par le premier utilisateur a accéder à son identité.

Dans une variante de réalisation, l'identité du premier utilisateur peut également être liée (i.e. associée) à un identifiant de la communication, ou à tout autre paramètre lié à la communication en cours entre le premier et le deuxième utilisateur.

Grâce à l'invention et plus particulièrement à l'association de l'identité du premier utilisateur avec la donnée caractéristique du deuxième utilisateur, le premier utilisateur peut être assuré que son identité est communiquée uniquement à un utilisateur de son choix qui peut prouver qu'il a bien été autorisé par le premier utilisateur à accéder à son identité. Cette preuve est apportée dès lors que le deuxième utilisateur peut démontrer qu'il détient une donnée correspondant à la donnée caractéristique associée à l'identité du premier utilisateur, c'est-à-dire identique à cette donnée caractéristique ou liée de manière univoque à celle-ci. Par exemple, lorsque la donnée caractéristique du deuxième utilisateur associée à l'identité du premier utilisateur est une clé publique d'une paire de clés asymétriques, la donnée correspondant à cette donnée caractéristique peut être la clé privée de la paire de clés asymétriques ou une empreinte de cette clé.

L'invention offre par conséquent un mécanisme permettant de garantir un échange sécurisé entre les utilisateurs participant à une même communication dans un contexte WebRTC, et par extension, pour le rendu de divers services télécoms liés à la présentation de l'identité des utilisateurs lors d'une communication comme par exemple la restriction de présentation d'identité (ou CLIR pour « Calling Line Identity Restriction » en anglais).

Le mécanisme proposé par l'invention est plus sécurisé que celui prévu aujourd'hui par l'IETF en ce qu'il empêche notamment un tiers s'interposant entre le premier utilisateur et le deuxième utilisateur (par exemple, le fournisseur de communications WebRTC auquel sont connectés les premier et deuxième utilisateurs), de s'emparer de l'identité du premier utilisateur sans son autorisation

En outre, il permet aisément au premier utilisateur de choisir l'identité qu'il accepte de dévoiler au deuxième utilisateur. Ainsi, dans un mode de réalisation particulier de l'invention, l'identité du premier utilisateur mise à disposition du deuxième utilisateur peut dépendre du deuxième utilisateur. Autrement dit, le premier utilisateur peut personnaliser l'identité qu'il associe à chaque « deuxième » utilisateur, en fonction de divers critères (appartenance à ses contacts, première communication avec cet utilisateur, etc.).

L'invention s'applique avantageusement aux deux types de protocoles SSO envisagés aujourd'hui par l'IETF dans le contexte WebRTC, à savoir aussi bien aux protocoles comprenant une pré-autorisation (tels que le protocole OAuth2.0) qu'aux protocoles à fourniture d'identité immédiate (ex. BrowserID) décrits précédemment.

Plus précisément, dans un mode de réalisation où l'on considère un protocole implémentant un mécanisme de pré-autorisation, l'étape d'obtention peut être mise en œuvre par le premier navigateur et les étapes d'association et de mise à disposition peuvent être mises en œuvre par une entité de confiance.

Ainsi, dans ce mode de réalisation, l'identité du premier utilisateur est enregistrée, en association avec une donnée caractéristique du deuxième utilisateur autorisé par le premier utilisateur, au niveau de l'entité de confiance qui a par exemple authentifié ou est susceptible d'identifier le premier utilisateur. Cette entité de confiance est typiquement le fournisseur d'identités du premier utilisateur qui génère un code ou un ticket d'autorisation au premier utilisateur dans le cadre du protocole OAuth2.0.

Ce mode de réalisation offre ainsi un mécanisme qui permet de « déléguer » le ticket d'autorisation émis par le fournisseur d'identités d'un navigateur web à l'autre, c'est-à-dire en d'autres mots, qui permet de transmettre avec l'autorisation du premier utilisateur le code d'autorisation du navigateur web du premier utilisateur au navigateur web de son correspondant. L'invention permet ainsi au fournisseur d'identités de vérifier aisément que le deuxième utilisateur a bien été autorisé par le premier utilisateur à utiliser le code d'autorisation auprès de lui alors qu'il a lui-même remis ce code au premier utilisateur, et que le deuxième utilisateur est bien autorisé à obtenir l'identité du premier utilisateur.

Dans une variante de ce mode de réalisation, ladite au moins une première donnée caractéristique du deuxième utilisateur est une clé publique d'une paire de clés publique et secrète attribuée au deuxième utilisateur, ladite au moins une première donnée caractéristique étant obtenue par le premier navigateur du deuxième navigateur. L'étape de mise à disposition du deuxième utilisateur de l'identité du premier utilisateur peut alors comprendre l'envoi par l'entité de confiance au deuxième navigateur de l'identité du premier utilisateur suite à la réception par l'entité de confiance d'une preuve d'authentification du premier utilisateur signée par le deuxième navigateur en utilisant la clé privée de la paire de clés attribuée au deuxième utilisateur.

Une telle preuve d'authentification peut être constituée notamment d'un code d'autorisation fournie par l'entité de confiance au premier utilisateur, qui est ensuite signé en utilisant la clé privée du deuxième utilisateur.

L'entité de confiance peut ainsi vérifier facilement que le code d'autorisation vient d'un utilisateur autorisé par le premier utilisateur en vérifiant la signature reçue à l'aide de la clé publique du deuxième utilisateur associée à l'identité du premier utilisateur. Ceci lui permet de valider que le deuxième utilisateur qui lui a transmis le code d'autorisation détient bien une donnée correspondant à la donnée caractéristique qui lui a été transmise par le premier utilisateur et qui a été enregistrée par ses soins en association avec son identité.

L'identité du premier utilisateur n'étant fournie par l'entité de confiance au deuxième utilisateur que le cas échéant, on comprend bien dès lors qu'il est impossible à un tiers se trouvant entre le premier et le deuxième utilisateur d'accéder à l'identité du premier utilisateur sans y être autorisé par celui-ci.

L'invention permet ainsi d'améliorer la sécurité des protocoles SSO avec mécanisme de pré-autorisation, tels que le protocole OAuth2.0.

Comme mentionné précédemment, l'invention ne se limite pas à ce type de protocoles et peut être également appliqué lorsqu'un protocole SSO à fourniture d'identité immédiate est envisagé.

Ainsi, dans un autre mode de réalisation s'appuyant sur l'utilisation d'un tel protocole, les étapes d'obtention, d'association et de mise à disposition sont préférentiellement mises en œuvre par le premier navigateur.

Ainsi, dans ce mode de réalisation, l'identité du premier utilisateur est enregistrée en association avec une donnée caractéristique du deuxième utilisateur autorisé par le premier utilisateur au niveau même du premier navigateur. C'est par ailleurs lui qui met à disposition du deuxième utilisateur l'identité du premier utilisateur dès lors que celui-ci détient une donnée correspondant à la donnée caractéristique associée par le premier navigateur à l'identité du premier terminal.

Ce mode de réalisation offre ainsi un mécanisme qui permet de s'assurer que l'identité du premier utilisateur n'est délivrée qu'à un deuxième utilisateur autorisé par le premier utilisateur. Il convient de noter que par identité du premier utilisateur on entend ici, pour les mécanismes à fourniture d'identité immédiate, une information qui identifie de manière unique le premier utilisateur.

Dans une variante de réalisation, ladite au moins une première donnée caractéristique du deuxième utilisateur est une clé publique d'une paire de clés publique et secrète attribuée au deuxième utilisateur, ladite au moins une première donnée caractéristique étant obtenue par le premier navigateur d'une entité de confiance ayant authentifié le deuxième utilisateur.

En outre :
- l'étape d'association peut comprendre le chiffrement par le premier navigateur de l'identité du premier utilisateur en utilisant la clé publique du deuxième utilisateur ; et
- l'étape de mise à disposition peut alors comprendre l'envoi par le navigateur au deuxième navigateur de l'identité ainsi chiffrée.

Ceci permet de garantir qu'un tiers se trouvant entre le premier et le deuxième utilisateur ne peut pas connaître l'identité du premier utilisateur (respectivement du deuxième utilisateur). En effet, en liant l'identité du premier utilisateur à la clé publique du deuxième utilisateur, le premier utilisateur est assuré que son identité n'est communiquée qu'au deuxième utilisateur qui possède seul la clé privée permettant de décoder l'identité du premier utilisateur.

Ainsi, la mise à disposition de l'identité du premier utilisateur est bien conditionnée dans cette variante de réalisation par la détention d'une donnée correspondant à la clé publique liée à l'identité du premier utilisateur puisque le deuxième utilisateur ne peut accéder à l'identité du premier utilisateur que s'il détient la clé privée correspondant à cette clé publique. Le simple fait de chiffrer l'identité du premier utilisateur avec la clé publique du deuxième utilisateur autorisé par le premier utilisateur permet de s'assurer que seul ce dernier peut y accéder et éviter toute interception non souhaitée de l'identité du premier utilisateur.

L'invention permet donc également d'améliorer la sécurité des protocoles SSO avec fourniture d'identité immédiate, tels que le protocole BrowserID.

Dans le mode de réalisation adapté aux protocoles SSO avec mécanisme de pré-autorisation, le procédé de gestion selon l'invention s'appuie comme mentionné précédemment sur diverses entités, à savoir notamment le terminal du premier utilisateur, le terminal du deuxième utilisateur et l'entité de confiance.

Ainsi, selon un autre aspect, l'invention vise également un terminal d'un premier utilisateur équipé d'un premier navigateur web et d'une pluralité de modules activés lors d'une communication entre le premier navigateur web et un deuxième navigateur web installé sur un terminal d'un deuxième utilisateur, cette pluralité de modules étant commandés par le premier navigateur web et comprenant :
- un module d'obtention d'au moins une première donnée caractéristique du deuxième utilisateur en provenance du deuxième navigateur web ; et
- un module de communication avec une entité de confiance pour associer auprès de l'entité de confiance une identité du premier utilisateur avec ladite au moins une première donnée caractéristique du deuxième utilisateur.

Corrélativement, l'invention vise aussi un procédé de communication d'un premier navigateur web installé sur un terminal d'un premier utilisateur avec une entité de confiance, destiné à être mis en œuvre lors d'une communication entre le premier navigateur web et un deuxième navigateur web installé sur un terminal d'un deuxième utilisateur, le procédé de communication comprenant :
- une étape d'obtention par le premier navigateur web en provenance du deuxième navigateur web, d'au moins une première donnée caractéristique du deuxième utilisateur ; et
- une étape de communication du premier navigateur web avec l'entité de confiance pour associer auprès de l'entité de confiance une identité du premier utilisateur avec ladite au moins une première donnée caractéristique du deuxième utilisateur.

L'identité du premier utilisateur associée auprès de l'entité de confiance à ladite au moins une première donnée caractéristique du deuxième utilisateur peut être identique ou distincte d'une identité du premier utilisateur utilisée lors d'une authentification du premier utilisateur, cette authentification pouvant être réalisée par l'entité de confiance.

Ceci permet notamment de personnaliser les identités fournies aux correspondants du premier utilisateur.

L'invention vise également une entité de confiance comprenant une pluralité de modules activés lors d'une communication entre un premier navigateur web installé sur un terminal du premier utilisateur et un deuxième navigateur web installé sur un terminal d'un deuxième utilisateur, cette pluralité de modules comprenant :
- un module d'association d'une identité du premier utilisateur avec au moins une première donnée caractéristique du deuxième utilisateur ; et
- un module, activé suite à la réception par l'entité de confiance d'une preuve que le deuxième utilisateur détient au moins une deuxième donnée correspondant à la première donnée caractéristique du deuxième utilisateur, configuré pour mettre à disposition du deuxième utilisateur de l'identité du premier utilisateur associée à ladite au moins une première donnée caractéristique du deuxième utilisateur.

Corrélativement, elle concerne aussi un procédé de mise à disposition d'une identité d'un premier utilisateur par une entité de confiance destiné à être mis en oeuvre lors d'une communication entre un premier navigateur web installé sur un terminal du premier utilisateur et un deuxième navigateur web installé sur un terminal d'un deuxième utilisateur, le procédé de mise à disposition comprenant :
- une étape d'association par l'entité de confiance d'une identité du premier utilisateur avec au moins une première donnée caractéristique du deuxième utilisateur ; et
- suite à la réception par l'entité de confiance d'une preuve que le deuxième utilisateur détient au moins une deuxième donnée correspondant à la première donnée caractéristique du deuxième utilisateur, une étape de mise à disposition du deuxième utilisateur, de l'identité du premier utilisateur associée à ladite au moins une première donnée caractéristique du deuxième utilisateur.

Ce procédé peut faire suite notamment à l'authentification du premier utilisateur par l'entité de confiance.

L'invention vise également un terminal (i.e. le terminal du deuxième utilisateur) apte à obtenir une identité d'un premier utilisateur lors d'une communication entre un premier navigateur web installé sur un terminal du premier utilisateur et un deuxième navigateur web installé sur ledit terminal, ledit terminal comprenant une pluralité de modules commandés par le deuxième navigateur et comprenant :
- un module de fourniture au premier navigateur d'au moins une première donnée caractéristique d'un deuxième utilisateur ;
- un module de fourniture à une entité de confiance d'une preuve que le deuxième utilisateur détient au moins une deuxième donnée correspondant à la première donnée caractéristique du deuxième utilisateur ; et
- un module de réception en provenance de l'entité de confiance d'une identité du premier utilisateur associée auprès de l'entité de confiance à la première donnée caractéristique du deuxième utilisateur.

Corrélativement, elle concerne également un procédé d'obtention d'une identité d'un premier utilisateur destiné à être mis en œuvre lors d'une communication entre un premier navigateur web installé sur un terminal du premier utilisateur et un deuxième navigateur web installé sur un terminal d'un deuxième utilisateur, le procédé comprenant :
- une étape de fourniture par le deuxième navigateur au premier navigateur d'au moins une première donnée caractéristique du deuxième utilisateur ;
- une étape de fourniture par le deuxième navigateur à une entité de confiance, d'une preuve que le deuxième utilisateur détient au moins une deuxième donnée correspondant à la première donnée caractéristique du deuxième utilisateur ; et
- une étape de réception par le deuxième navigateur en provenance de l'entité de confiance d'une identité du premier utilisateur associée auprès de l'entité de confiance à la première donnée caractéristique du deuxième utilisateur.

Les caractéristiques précitées du terminal du premier utilisateur et du terminal du deuxième utilisateur ont été décrites au regard de la fourniture de l'identité du premier utilisateur au deuxième utilisateur. Toutefois, il va de soi que pour encadrer de façon sécurisée une communication entre le premier et le deuxième utilisateur, des caractéristiques similaires sont préférentiellement présentes sur les terminaux des deux utilisateurs pour permettre également la fourniture sécurisée de l'identité du deuxième utilisateur au premier utilisateur (ou de manière équivalente, les rôles du premier et du deuxième utilisateur sont inversés).

Les diverses entités précitées (à savoir le terminal du premier utilisateur, l'entité de confiance et le terminal du deuxième utilisateur selon l'invention) forment un système de communication permettant au premier et au deuxième utilisateur d'échanger leurs identités de manière sécurisée lors d'une communication via leurs navigateurs web.

Ainsi l'invention vise également un système de communication comprenant :
- un terminal d'un premier utilisateur conforme à l'invention sur lequel est installé un premier navigateur web et tel que mentionné précédemment ;
- un terminal d'un deuxième utilisateur conforme à l'invention sur lequel est installé un deuxième navigateur web et tel que mentionné précédemment ; et
- une entité de confiance conforme à l'invention et telle que mentionnée précédemment.

Le terminal du premier utilisateur et le procédé de communication mis en œuvre par ce terminal, l'entité de confiance et le procédé de mise à disposition mis en œuvre par cette entité de confiance, le terminal du deuxième utilisateur ainsi que le procédé d'obtention mis en œuvre par ce terminal, et le système de communication selon l'invention bénéficient des mêmes avantages cités précédemment que le système de gestion et le procédé de gestion selon l'invention lorsque ceux-ci sont utilisés dans le cadre de protocoles avec mécanisme de pré-autorisation.

Dans le mode de réalisation adapté aux protocoles SSO avec mécanisme de fourniture d'identité immédiate, le système de gestion selon l'invention est intégré dans le terminal du premier utilisateur.

Ainsi, selon un autre aspect, l'invention vise également un terminal comprenant un système de gestion selon l'invention (terminal du premier utilisateur).

L'invention concerne aussi un système de communication comprenant :
- un terminal d'un premier utilisateur sur lequel est installé un premier navigateur web et comprenant un système de gestion selon l'invention ; et
- un terminal d'un deuxième utilisateur sur lequel est installé un deuxième navigateur web, apte à accéder à une identité du premier utilisateur mise à disposition par le terminal du premier utilisateur.

Le terminal et le système de communication selon ce mode de réalisation de l'invention bénéficient également des mêmes avantages cités précédemment que le système de gestion et le procédé de gestion selon l'invention lorsque ceux-ci sont utilisés dans le cadre de protocoles avec fourniture immédiate d'identité.

Dans un mode particulier de réalisation, les différentes étapes des procédés de gestion et/ou d'obtention et/ou de communication et/ou de mise à disposition sont déterminées par des instructions de programmes d'ordinateurs.

En conséquence, l'invention vise aussi un programme d'ordinateur sur un support d'informations, ce programme étant susceptible d'être mis en œuvre dans un terminal, une entité de confiance, un système de gestion ou plus généralement dans un ordinateur, ce programme comportant des instructions adaptées à la mise en œuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

On peut également envisager, dans d'autres modes de réalisation, que les procédés d'obtention, de gestion, de mise à disposition, et de communication, les terminaux, l'entité de confiance, le système de gestion et les systèmes de communication selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1, déjà décrite, représente, de façon schématique l'architecture de sécurité sur laquelle repose la technologie WebRTC ;
- la figure 2, déjà décrite, illustre de façon schématique l'implémentation d'un mécanisme SSO avec pré-autorisation tel qu'il est envisagé dans l'état de la technique dans le contexte WebRTC ;
- la figure 3 représente un système de communication conforme à l'invention dans un premier mode de réalisation ;
- les figures 4A et 4B illustrent respectivement l'architecture matérielle d'un terminal et d'une entité de confiance selon l'invention ;
- la figure 5 représente les principales étapes d'un procédé de gestion, d'un procédé de communication et d'un procédé d'obtention selon l'invention tels qu'ils sont mis en œuvre par le système de communication de la figure 3 dans le premier mode de réalisation ;
- la figure 6 représente un système de communication conforme à l'invention dans un second mode de réalisation ; et
- la figure 7 représente les principales étapes d'un procédé de gestion selon l'invention tel qu'il est mis en œuvre par le système de communication de la figure 6 dans le second mode de réalisation.

### Description détaillée de l'invention

L'invention est décrite ci-après dans le contexte de communications s'appuyant sur la technologie et l'architecture WebRTC telles qu'étudiées par le consortium W3C et l'IETF. Toutefois, cette hypothèse n'est pas limitative et l'invention peut s'appliquer à d'autres systèmes de communication entre des navigateurs web, tels que par exemple des systèmes de communication propriétaires.

En outre, dans la suite de la description, par souci de simplification, on se limite à une communication entre deux utilisateurs, Alice et Bob. Toutefois, l'invention s'applique également à des communications auxquelles participe un nombre plus important d'utilisateurs.

Comme mentionné précédemment, l'invention propose un mécanisme sécurisé d'échanges d'identités entre des utilisateurs participant à une même communication, pouvant être utilisé aussi bien en association avec un protocole SSO avec pré-autorisation qu'avec un protocole SSO à fourniture d'identité immédiate.

La **figure 3** illustre, dans son environnement, un système de communication 10 conforme à l'invention dans un premier mode de réalisation dans lequel l'invention est utilisée en association avec un protocole SSO basé sur un mécanisme de pré-autorisation. Dans l'exemple envisagé ici, ce protocole SSO est le protocole OAuth2.0 connu en soi.

Conformément à l'invention, dans ce premier mode de réalisation, le système de communication 10 comprend :
- un terminal 20 d'un premier utilisateur (Alice), conforme à l'invention, et sur lequel est installé un navigateur web 21 ;
- un terminal 30 d'un deuxième utilisateur (Bob), conforme à l'invention, et sur lequel est installé un navigateur web 31 ; et
- au moins une entité de confiance 40, conforme à l'invention, et apte ici à authentifier les utilisateurs Alice et Bob. Cette entité de confiance 40 est par exemple un fournisseur d'identités ou IdP. Par souci de simplification sur la figure 3, on considère une unique entité de confiance 40 commune aux deux utilisateurs Alice et Bob et apte à gérer les identités d'Alice (40/Alice) et de Bob (40/Bob) respectivement. Toutefois, l'invention s'applique également lorsque Alice et Bob font appel chacun à une entité de confiance distincte.

Le système de communication 10 comprend également ici un serveur web 50 d'un fournisseur de communications WebRTC (ou CSP pour « Communication Service Provider » en anglais), auquel sont reliés les terminaux 20 et 30 d'Alice et Bob par l'intermédiaire d'une liaison sécurisée, par exemple au moyen d'une liaison établie selon le protocole HTTPS (HyperText Transfer Protocol Secure).

Les navigateurs web 21 et 31 sont dotés d'une interface de programmation ou API WebRTC. Cette API comprend, de façon connue en soi, un objet média « PeerConnection » qui permet de gérer les communications avec les autres navigateurs web, et est apte à instancier un proxy « IdP Proxy » pour interagir et communiquer avec l'entité de confiance 40 (autrement dit, le proxy réalise l'interface entre le navigateur web et l'entité de confiance). De tels objets, implémentés dans le cadre de WebRTC en langage Javascript, sont connus en soi et détaillés dans la spécification de l'API WebRTC citée précédemment.

Dans le premier mode de réalisation décrit ici, on suppose que chaque terminal 20 et 30 dispose des mêmes moyens pour mettre à disposition de l'autre utilisateur l'identité de son propre utilisateur et recevoir l'identité de l'autre utilisateur.

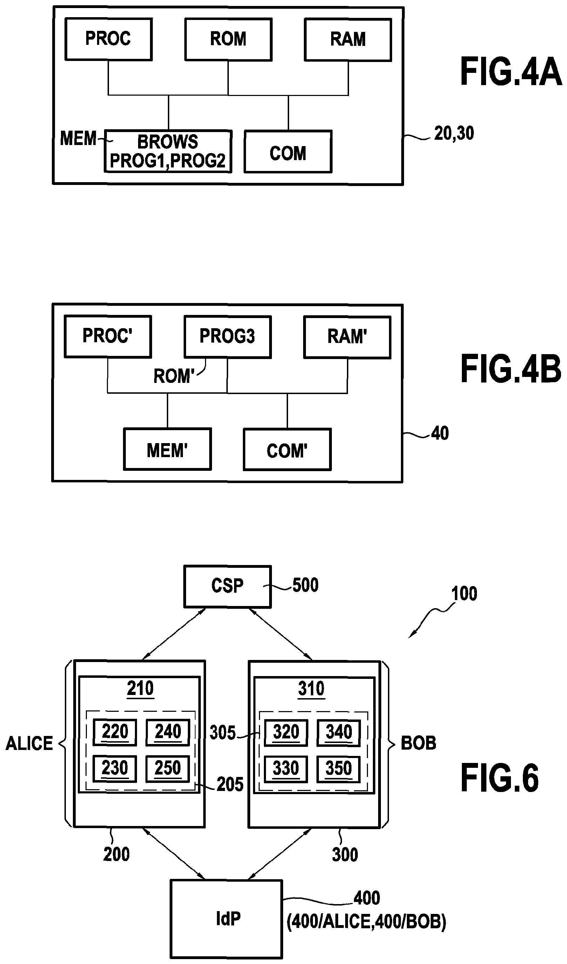

Plus précisément, les terminaux 20 et 30 ont ici l'architecture matérielle d'un ordinateur telle que représentée schématiquement à la **figure 4A****.**

Chaque terminal comprend notamment un processeur PROC, une mémoire morte ROM, une mémoire vive RAM, une mémoire non volatile MEM dans laquelle est stocké le navigateur web du terminal (désigné par BROWS sur la figure 4A), ainsi que des moyens de communication COM sur un réseau de télécommunications NW. Aucune limitation n'est attachée à la nature de ce réseau : il peut s'agir d'un réseau fixe ou mobile, filaire ou sans fil, local ou non, etc. Ces moyens de communications permettent aux terminaux 20 et 30 de communiquer entre eux, mais également avec le serveur web 50 et l'entité de confiance 40.

La mémoire non volatile MEM de chaque terminal constitue un support d'enregistrement conforme à l'invention, lisible par le processeur PROC et sur lequel sont enregistrés un ou plusieurs programmes d'ordinateur conformes à l'invention, comportant des instructions pour l'exécution :
- des étapes d'un procédé de communication avec l'entité de confiance 40, conforme à l'invention et désigné ci-après par programme PROG1 ; et
- des étapes d'un procédé d'obtention d'une identité d'un utilisateur, conforme à l'invention, et désigné ci-après par programme PROG2.

Le programme d'ordinateur PROG1 définit, de façon équivalente, des modules fonctionnels de chacun des terminaux 20 et 30 et plus précisément des navigateurs 21 et 31, ainsi que les interactions entre ces modules, ces modules étant activés lors d'une communication à laquelle participent les navigateurs des terminaux. Aucune limitation n'est attachée au type de communication considérée : il peut s'agir d'une communication de type audio, vidéo, messagerie instantanée, etc., telle que proposée notamment (mais de façon non exhaustive) par la technologie WebRTC.

Les modules fonctionnels définis par le programme d'ordinateur PROG1 incluent notamment, dans le premier mode de réalisation, pour le terminal 20 (respectivement pour le terminal 30) :
- un module d'obtention 22 (respectivement 32) d'au moins une donnée DB caractéristique de Bob (respectivement au moins une donnée DA caractéristique d'Alice), et
- un module 23 (respectivement 33) de communication avec l'entité de confiance 40, apte à associer auprès de celle-ci la donnée caractéristique DB (respectivement DA) avec une identité IDA d'Alice (respectivement avec une identité IDB de Bob). Aucune limitation n'est attachée à la nature de l'identité : il peut s'agir par exemple d'une adresse mél, d'un numéro de téléphone, etc.

Les modules 22 et 23 (respectivement 32 et 33) s'appuient ici notamment sur les moyens de communication COM, sur l'objet media « Peer Connection » (pour les modules 22 et 32) et sur le proxy « IdP proxy » (pour les modules 23 et 33) du terminal 20 (respectivement du terminal 30).

De façon similaire, le programme d'ordinateur PROG2 définit également des modules fonctionnels (ainsi que les interactions de ces modules entre eux) de chacun des terminaux 20 et 30 et plus précisément des navigateurs 21 et 31 installés sur ces terminaux, ces modules étant activés et commandés par les navigateurs lors d'une communication entre ces navigateurs.

Ces modules fonctionnels incluent notamment, dans le premier mode de réalisation, pour le terminal 30 (respectivement pour le terminal 20) :
- un module 34 (respectivement 24) de fourniture au navigateur du terminal 20 (respectivement du terminal 30) de la donnée DB caractéristique de Bob (respectivement de la donnée DA caractéristique d'Alice),
- un module 35 (respectivement 25) de fourniture à l'entité de confiance 40 d'une preuve que Bob (respectivement Alice) détient au moins une donnée correspondant (liée) à la donnée DB (respectivement à la donnée DA), et
- un module 36 (respectivement 26) de réception apte à recevoir, en provenance de l'entité de confiance 40, l'identité IDA d'Alice (respectivement l'identité IDB de Bob).

Ces modules s'appuient notamment sur les moyens de communication COM du terminal 30 (respectivement du terminal 20).

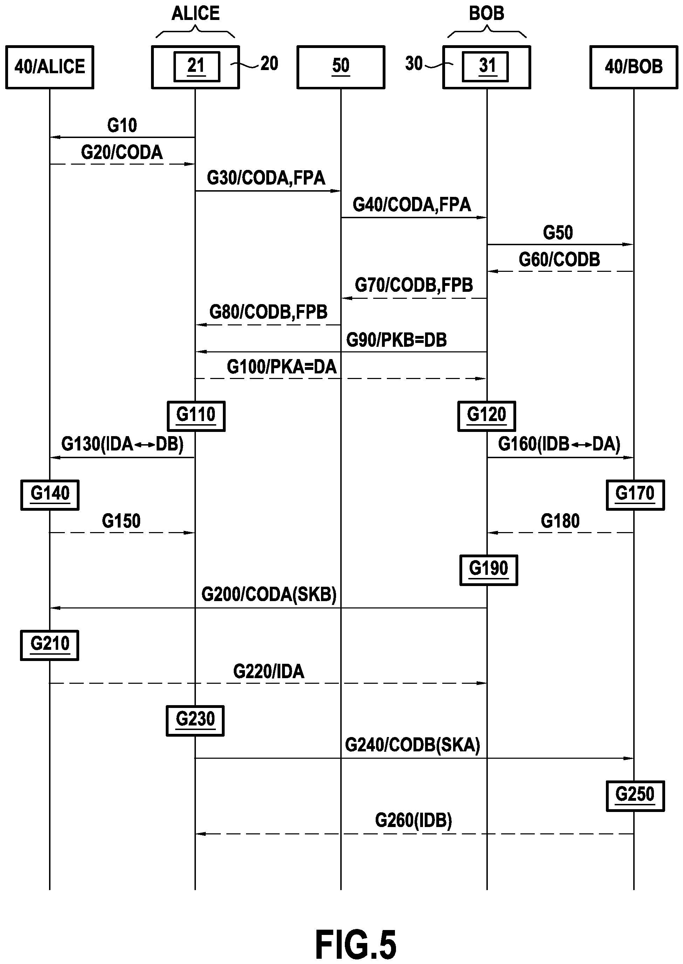

Les fonctions des modules fonctionnels 22-26 et 32-36 des terminaux 20 et 30 respectivement sont décrites plus en détail ultérieurement en référence à la figure 5.

Dans le premier mode de réalisation décrit ici, l'entité de confiance 40 dispose également de l'architecture matérielle d'un ordinateur telle que représentée schématiquement à la **figure 4B****.**

Elle comprend notamment un processeur PROC', d'une mémoire morte ROM', d'une mémoire vive RAM', une mémoire non volatile MEM', ainsi que des moyens de communication COM' sur le réseau de télécommunications NW. Ces moyens de communication permettent à l'entité de confiance 40 de communiquer notamment avec les terminaux 20 et 30 et plus particulièrement avec les navigateurs 21 et 31 installés sur ces terminaux.

La mémoire morte ROM' de l'entité de confiance 40 constitue un support d'enregistrement conforme à l'invention, lisible par le processeur PROC' et sur lequel est enregistré un programme d'ordinateur PROG 3 conforme à l'invention, comportant des instructions pour l'exécution des étapes d'un procédé de mise à disposition d'identités d'utilisateurs, conforme à l'invention.

Le programme d'ordinateur PROG3 définit, de façon équivalente, des modules fonctionnels de l'entité de confiance 40 ainsi que les interactions entre ces modules, ces modules étant activés lors d'une communication à laquelle participent les navigateurs 21 et 31 des terminaux 20 et 30 respectivement.

Les modules fonctionnels définis par le programme d'ordinateur PROG3 incluent notamment, dans le premier mode de réalisation :
- un module d'authentification 41 des utilisateurs participant à la communication (Alice et Bob en l'occurrence dans l'exemple envisagé ici),
- un module 42 d'association d'identités d'utilisateurs avec des données caractéristiques d'autres utilisateurs, et
- un module 43 de mise à disposition des identités des utilisateurs activé sous certaines conditions.

Les fonctions des modules fonctionnels 41 à 43 sont décrites plus en détail maintenant en référence à la figure 5.

La **figure 5** illustre, sous forme de diagramme, les principales étapes des procédés de gestion, de mise à disposition et d'obtention selon l'invention dans le premier mode de réalisation, lorsqu'ils sont mis en œuvre par les différentes entités formant le système de communication 10, à savoir les terminaux 20 et 30 et l'entité de confiance 40 et lorsque ce système utilise le protocole d'authentification OAuth2.0.

Il convient de noter que dans ce premier mode de réalisation, les étapes du procédé de gestion sont réparties sur plusieurs entités, à savoir sur les terminaux 20 et 30 et sur l'entité de confiance 40. Les modules de ces entités mettant en œuvre les étapes du procédé de gestion forment donc un système de gestion au sens de l'invention.

On suppose qu'Alice souhaite établir, par l'intermédiaire du navigateur 21 installé sur son terminal 20, une communication avec Bob ou plus précisément avec le navigateur 31 installé sur le terminal 30 de Bob. Alice et Bob remplissent chacun tour à tour le rôle de premier utilisateur et de deuxième utilisateur au sens de l'invention.

A cet effet, en préalable, le navigateur 21 envoie une requête d'authentification d'Alice à son fournisseur d'identités (étape G10), autrement dit ici, à l'entité de confiance 40 (désignée pour plus de clarté sur la figure 5 par 40/Alice lorsqu'elle gère l'identité d'Alice, et par 40/Bob lorsqu'elle gère l'identité de Bob). L'authentification d'Alice par le fournisseur d'identités 40/Alice (et plus particulièrement par son module d'authentification 41) est réalisée de façon connue en soi, comme détaillée dans l'architecture WebRTC et en se basant sur le protocole OAuth2.0.

Le navigateur 21 reçoit, en réponse à cette requête d'authentification, un code d'autorisation CODA du fournisseur d'identités 40/Alice (étape G20). Ce code d'autorisation constitue en soi une preuve d'authentification d'Alice par l'entité de confiance 40.

Le navigateur 21 envoie le code d'autorisation CODA dans un message de signalisation (ex. requête d'appel) au navigateur 31 de Bob, par l'intermédiaire du serveur web 50 (étape G30). Il joint également ici au message de signalisation une empreinte numérique FPA, qui consiste en une information numérique identifiant de manière unique la communication entre Alice et Bob. Cette empreinte est par exemple constituée d'un condensé (ou « hash » en anglais) d'une clé publique PKA d'une paire de clés asymétriques attribuée à Alice pour la communication avec Bob pour établir des échanges pair-à-pair sécurisés avec Bob selon le protocole DTLS. Cette paire de clés comprend la clé publique PKA et la clé privée associée SKA. Elle est générée par le navigateur 21 d'Alice pour la communication considérée.

Le message de signalisation contenant le code d'autorisation CODA et l'empreinte FPA d'Alice est routé par le serveur web 50 jusqu'au navigateur 31 de Bob (étape G40).

Dans le premier mode de réalisation décrit ici, sur réception du message de signalisation d'Alice, le navigateur 31 du terminal 30 de Bob envoie une requête d'authentification de Bob à son fournisseur d'identités (étape G50), autrement dit ici à l'entité de confiance 40/Bob. Il obtient en retour, conformément au protocole OAuth2.0, un code d'autorisation CODB (étape G60). Il convient de noter que les étapes G50 et G60 ne sont pas nécessairement réalisées suite à la réception de la requête d'appel d'Alice, mais peuvent être mises en œuvre par le navigateur 31 du terminal 30 de Bob en parallèle par exemple des étapes G10 et G20, ou à un autre moment précédant la réception de la requête d'appel provenant d'Alice.

Le navigateur 31 de Bob répond à la requête d'appel d'Alice en envoyant son code d'autorisation CODB et une empreinte numérique FPB d'une clé publique PKB qui lui a été attribuée par son navigateur 31 (étape G70). Comme mentionné précédemment pour Alice, cette clé publique PKB appartient à une paire de clés asymétriques (i.e. comprenant la clé publique PKB et une clé privée associée SKB), attribuée par le navigateur 31 à Bob pour la communication avec Alice, en vue d'établir des échanges pair-à-pair sécurisés avec Alice selon le protocole DTLS.

La réponse du navigateur 31 transite par le serveur web 50 et est routée par celui-ci jusqu'au navigateur 21 d'Alice (étape G80).

Le navigateur 31 de Bob initie ensuite l'établissement d'un canal de communication sécurisé (ou média sécurisé) avec le navigateur 21 d'Alice. La sécurisation des échanges sur ce canal de communication est assurée par l'utilisation du protocole DTLS (Datagram Transport Layer Security), connu en soi.

A cet effet, le navigateur 31 de Bob envoie au navigateur 21 d'Alice, par l'intermédiaire de son module 34, sa clé publique PKB (étape G90). La clé publique PKB constitue une donnée DB caractéristique de Bob au sens de l'invention, en ce sens qu'elle est allouée de façon unique à Bob (et ici à sa communication avec Alice) et identifie donc Bob de manière non équivoque.

La donnée caractéristique DB de Bob (i.e. sa clé publique PKB ici) est obtenue par le module d'obtention 22 du navigateur 21 d'Alice.

Le navigateur 21 d'Alice envoie en réponse au navigateur 31 de Bob, par l'intermédiaire de son module 24, sa clé publique PKA(étape G100)). Cette clé publique PKA constitue une donnée DA caractéristique d'Alice (et ici de sa communication avec Bob) et l'identifie donc de manière non équivoque.

La donnée caractéristique DA d'Alice (i.e. sa clé publique PKA ici) est obtenue par le module d'obtention 32 du navigateur 31 de Bob.

Puis le navigateur 21 d'Alice vérifie la validité de la clé publique PKB à partir de l'empreinte FPB reçue à l'étape G80, et la stocke le cas échéant dans la mémoire MEM non volatile du terminal 20 (étape G110). En parallèle, le navigateur 31 de Bob vérifie la validité de la clé publique PKA à partir de l'empreinte FPA reçue à l'étape G40, et la stocke le cas échéant dans la mémoire MEM non volatile du terminal 30 (étape G120). Les étapes G110 et G120 sont conduites de façon connue de l'homme du métier.

Le navigateur 21 d'Alice, par le biais de son module 23, communique alors avec son fournisseur d'identités 40/Alice (i.e. avec l'entité de confiance 40), pour associer (i.e. enregistrer) auprès de celui-ci une identité IDA d'Alice avec la donnée DB=PKB caractéristique de Bob (étape G130). L'identité IDA peut être la même identité que celle utilisée par le navigateur 21 pour s'authentifier au cours de l'étape G10, ou une identité sélectionnée par Alice pour Bob (autrement dit qui peut varier en fonction du correspondant avec lequel Alice souhaite établir une communication). Il peut s'agir notamment d'une adresse mél, d'un numéro de téléphone, etc.

Le fournisseur d'identités 40/Alice enregistre, par le biais de son module 42, la donnée DB caractéristique de Bob en association avec l'identité IDA d'Alice dans sa mémoire non volatile MEM' (étape G140). Il confirme cet enregistrement auprès du navigateur 21 (étape G150).

Le navigateur 31 de Bob enregistre de même auprès du fournisseur d'identités 40/Bob une identité IDB de Bob (sélectionnée ou non en fonction d'Alice) en association avec la donnée caractéristique DA=PKA d'Alice (étapes G160-G180). Les étapes G160 de communication, G170 d'enregistrement et G180 de confirmation sont identiques aux étapes G130, G140 et G150 décrites précédemment pour Alice.

Puis le navigateur 31 de Bob, via son module 35, signe le code d'autorisation CODA reçu d'Alice en utilisant la clé privée SKB de Bob et un algorithme de signature prédéterminé (étape G190). Le module 35 procède à cet effet de façon connue en soi et non détaillée ici.

La signature du code d'autorisation notée CODA(SKB) est ensuite envoyée par le module 35 du navigateur 31 au fournisseur d'identités 40/Alice dans une requête visant à obtenir l'identité d'Alice (étape G200).

Le code d'autorisation signé ou de façon équivalente la signature CODA(SKB) constitue en soi une preuve que Bob détient une donnée, à savoir la clé secrète SKB, correspondant de manière non ambiguë à la donnée DB caractéristique de Bob, autrement dit ici à la clé publique PKB. En effet, seule une signature générée à l'aide de la clé secrète SKB de Bob peut être vérifiée par le fournisseur d'identités 40/Alice à l'aide de la clé publique PKB. La vérification de la signature CODA(SKB) par le fournisseur d'identités 40/Alice lui permet en outre de retrouver le code d'autorisation CODA qu'il a confié à Alice lors de son authentification à l'étape G20. Le fournisseur d'identités peut ainsi valider que ce code d'autorisation a bien été délégué par Alice à un utilisateur autorisé, à savoir l'utilisateur pour lequel elle a requis l'enregistrement de la donnée caractéristique DB=PKB au cours de l'étape G130 en association avec son identifiant IDA.

Ainsi, sur réception de la requête en provenance du navigateur 31 de Bob, le fournisseur d'identités 40/Alice vérifie que la signature CODA(SKB) du code d'autorisation CODA correspond bien à une donnée caractéristique enregistrée en association avec l'identité d'Alice, à savoir ici la donnée DB=PKB de Bob (étape G210).

Le cas échéant, le fournisseur d'identités 40/Alice met à disposition, par l'intermédiaire de son module 43, l'identité IDA associée dans sa mémoire non volatile MEM' à la donnée caractéristique DB=PKB (étape G220). Cette mise à disposition comprend l'envoi direct de l'identité IDA par le fournisseur d'identités 40/Alice au navigateur 31 de Bob (et notamment à son module 36), c'est-à-dire sans passer par le serveur web 50. On note que l'identité IDA peut être chiffrée par le fournisseur d'identités 40/Alice avec la clé publique PKB de Bob avant de lui être transmise ou être envoyée sur un canal sécurisé (par exemple conformément au protocole HTTPS).

Si la vérification de la signature échoue (aucune donnée n'est stockée en association avec un identifiant d'Alice permettant la vérification de la signature reçue du navigateur 31), le fournisseur d'identités 40/Alice rejette la requête d'identité de Bob et ne fournit pas l'identité IDA d'Alice à Bob.

Des étapes G230 de signature du code d'autorisation CODB à l'aide de la clé secrète SKA d'Alice et G240 d'envoi par le module 25 du navigateur 21 d'une requête au fournisseur d'identités 40/Bob visant à obtenir l'identité de Bob et contenant la signature CODB(SKA) du code d'autorisation CODB, ainsi que des étapes G250 de vérification de la signature et G260 d'envoi de l'identité IDB par le fournisseur d'identité 40/Bob au navigateur 31 du terminal 30 sont mises en œuvres de façon identique aux étapes G190, G200, G210 et G220 décrites précédemment.

Ainsi, à l'issue de l'étape G220 (respectivement de l'étape G260), le navigateur 21 d'Alice (respectivement le navigateur 31 de Bob), dispose de l'identité IDA d'Alice (respectivement de l'identité IDB de Bob). De façon avantageuse, ces identités n'ont pas transitées par le serveur web 50, mais ont été envoyées directement aux navigateurs 21 et 31 par le canal sécurisé préalablement établi après avoir vérifié que l'un et l'autre détenaient une preuve de la délégation des codes d'autorisation par Alice et Bob respectivement.

Ainsi, l'invention permet, dans ce premier mode de réalisation, un échange d'identités sécurisé entre Alice et Bob conformes aux exigences du protocole OAuth2.0.

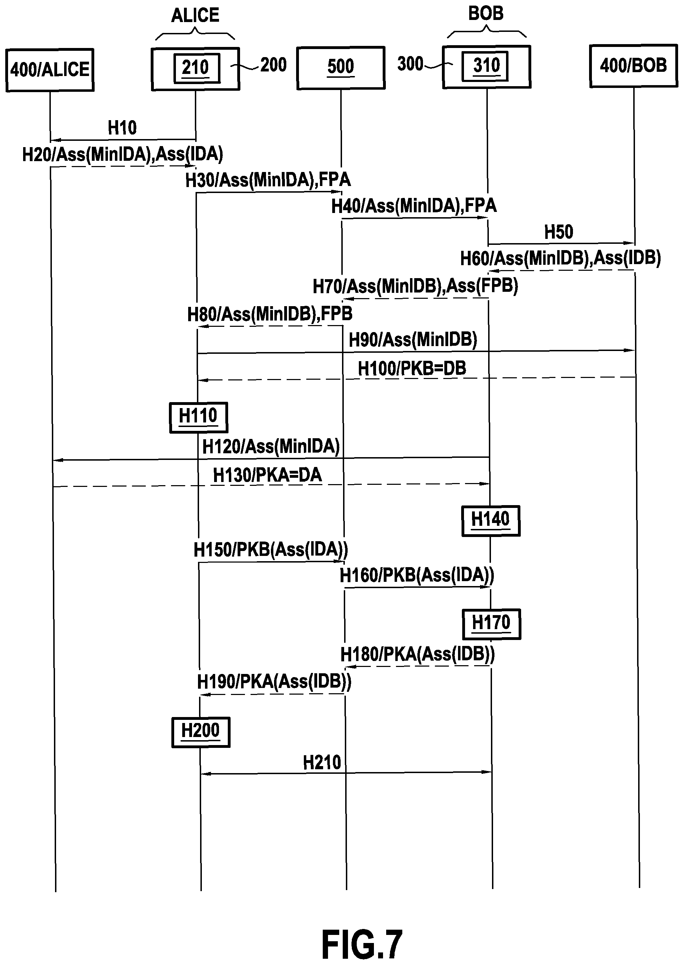

Nous allons maintenant décrire, en référence aux figures 6 et 7, un second mode de réalisation de l'invention dans lequel un échange d'identités sécurisé entre Alice et Bob est permis par l'invention lorsqu'un protocole SSO à fourniture d'identité immédiate est envisagé dans un contexte WebRTC. Ce protocole est, dans l'exemple considéré ici, le protocole BrowserID.

La **figure 6** illustre, dans son environnement, un système de communication 100 conforme à l'invention dans le second mode de réalisation.

Dans ce second mode de réalisation, le système de communication 100 comprend :
- un terminal 200 d'un premier utilisateur ('Alice'), conforme à l'invention, et sur lequel est installé un navigateur web 210, le terminal 200 comprenant un système de gestion 205 conforme à l'invention ;
- un terminal 300 d'un deuxième utilisateur ('Bob') sur lequel est installé un navigateur web 310 ;
- au moins une entité de confiance 400 apte à authentifier les utilisateurs Alice et Bob. Cette entité de confiance 400 est par exemple un fournisseur d'identités. Par souci de simplification sur la figure 6, on considère une unique entité de confiance 400, commune aux deux utilisateurs Alice et Bob. Toutefois, l'invention s'applique également lorsque Alice et Bob dispose chacun d'une entité de confiance distincte ; et
- un serveur web 500 d'un fournisseur de communications WebRTC (ou CSP), auquel sont reliés les terminaux 200 et 300 d'Alice et Bob par l'intermédiaire d'une liaison sécurisée, par exemple une liaison établie selon le protocole HTTPS (HyperText Transfer Protocol Secure).

Les navigateurs web 210 et 310 sont dotés comme les navigateurs web 21 et 31 de la figure 3 d'une interface de programmation ou API WebRTC, comprenant un objet média « PeerConnection » et apte à instancier un proxy « IdP Proxy » pour interagir et communiquer avec l'entité de confiance 400.

Comme pour le premier mode de réalisation décrit ici, on suppose que chaque terminal 200 et 300 dispose des mêmes moyens, pour mettre à disposition de l'autre utilisateur l'identité de son propre utilisateur et recevoir l'identité de l'autre utilisateur.

Les terminaux 200 et 300 ont par ailleurs, comme les terminaux 20 et 30, l'architecture matérielle d'un ordinateur telle qu'illustrée schématiquement à la figure 4A. Ils diffèrent toutefois des terminaux 20 et 30 en ce que la mémoire non volatile MEM de chaque terminal constitue maintenant un support d'enregistrement conforme à l'invention, lisible par le processeur PROC et sur lequel est enregistré un programme d'ordinateur conforme à l'invention, comportant des instructions pour l'exécution des étapes d'un procédé de gestion conforme à l'invention (désigné par programme PROG4).

Le programme d'ordinateur PROG4 définit, de façon équivalente, des modules fonctionnels de chacun des terminaux 200 et 300 et plus précisément des navigateurs 210 et 310, ainsi que les interactions entre ces modules, ces modules étant activés et commandés par les navigateurs 210 et 310 lors d'une communication à laquelle participent ces navigateurs.

Les modules fonctionnels définis par le programme d'ordinateur PROG4 incluent notamment, dans le second mode de réalisation, pour le terminal 200 (respectivement pour le terminal 300) :
- un module d'obtention 220 (respectivement 320) d'au moins une donnée DB caractéristique de Bob (respectivement au moins une donnée DA caractéristique d'Alice),
- un module 230 (respectivement 330) d'association d'une identité IDA d'Alice (respectivement une identité IDB de Bob) avec la donnée caractéristique DB (respectivement DA),
- un module 240 (respectivement 340) de mise à disposition de l'identité IDA d'Alice (respectivement IDB de Bob) sous certaines conditions, détaillées ultérieurement, et
- un module 250 (respectivement 350) d'obtention de l'identité IDB de Bob (respectivement d'Alice) sous certaines conditions, également détaillées ultérieurement.

Les fonctions des modules fonctionnels 220-250 et 320-350 des terminaux 200 et 300 respectivement sont décrites plus en détail maintenant en référence à la figure 7.

La **figure 7** illustre, sous forme de diagramme, les principales étapes du procédé de gestion selon l'invention dans le second mode de réalisation, lorsqu'il est mis en œuvre par le système de communication 100 et plus précisément par les terminaux 200 et 300, et lorsque ce système utilise le protocole d'authentification BrowserID.

On suppose qu'Alice souhaite établir, par l'intermédiaire du navigateur 210 installé sur son terminal 200, une communication avec Bob ou plus précisément avec le navigateur 310 installé sur le terminal 300 de Bob. Alice et Bob remplissent chacun tour à tour le rôle de premier utilisateur et de deuxième utilisateur au sens de l'invention.

A cet effet, en préalable, le navigateur 210 envoie une requête d'authentification d'Alice à son fournisseur d'identités 400/Alice (étape H10). L'authentification d'Alice par le fournisseur d'identités 400/Alice est réalisée de façon connue en soi, comme détaillée dans l'architecture WebRTC et en se basant ici sur le protocole BrowseID.

Le navigateur 210 reçoit, en réponse à cette requête d'authentification, un certificat relatif à une identité minimaliste MinIDA d'Alice noté Ass(MinIDA), et un certificat relatif à une identité IDA d'Alice noté Ass(IDA) (étape H20).

De façon connue, un certificat d'une identité émis par une entité de confiance comprend l'identité en clair ainsi qu'une signature de cette identité par l'entité de confiance. Il s'agit d'une preuve d'authentification par l'entité de confiance de l'utilisateur utilisant cette identité.

Le certificat Ass(MinIDA), respectivement Ass(IDA), constitue par conséquent une preuve qu'Alice a bien été identifiée par le fournisseur d'identités 400/Alice avec l'identité MinIDA, respectivement IDA.

Il convient de noter que l'identité minimaliste MinIDA d'Alice désigne ici une information destinée à fournir un niveau de confiance minimal sur Alice (i.e. elle a été authentifiée par le fournisseur d'identités 400/Alice), par exemple à Bob ou à son fournisseur d'identités. Cette identité minimaliste peut être une information anonymisée, elle peut être simplement constituée d'un ou de plusieurs champs de données comprenant par exemple, suivant le contexte envisagé, un code de pays de résidence, un nom de la société à laquelle appartient Alice, ou même le prénom (seulement, i.e. pas son nom) d'Alice.

Dans le second mode de réalisation décrit ici, le certificat d'identité minimaliste Ass(MinIDA) comprend en outre un lien ou des informations permettant d'obtenir auprès du fournisseur d'identités 400/Alice, une clé publique PKA appartenant à une paire de clés asymétriques attribuée à Alice. La paire de clés asymétriques comprend également une clé secrète SKA associée à la clé publique PKA.

Le navigateur 210 envoiele certificat d'identité minimaliste Ass(MinIDA) ainsi qu'une empreinte FPA de la clé publique PKA d'Alice dans un message de signalisation (requête d'appel) au navigateur 310 de Bob, par l'intermédiaire du serveur web 500 (étape H30).

Le message de signalisation contenant le certificat d'identité minimaliste Ass(MinIDA) et l'empreinte FPA d'Alice est routé par le serveur web 500 jusqu'au navigateur 310 de Bob (étape H40).

Dans le second mode de réalisation décrit ici, sur réception du message de signalisation d'Alice, le navigateur 310 du terminal 30 de Bob envoie une requête d'authentification de Bob à son fournisseur d'identités 400/Bob (étape H50). Il obtient en retour, conformément au protocole BrowserID, un certificat relatif à une identité minimaliste MinIDB de Bob noté Ass(MinIDB), et un certificat relatif à une identité IDB de Bob l'identifiant de manière non ambiguë, noté Ass(IDB) (étape H60). Chaque certificat relatif à une identité (IDB ou MinIDB) contient cette identité et une signature de cette identité par le fournisseur d'identités 400/Bob.

En variante, d'autres protocoles d'authentification que le protocole BrowserID peuvent être utilisés pour les étapes H10 et H50.

Il convient de noter que les étapes H50 et H60 ne sont pas nécessairement réalisées suite à la réception de la requête d'appel d'Alice, mais peuvent être mises en œuvre par le navigateur 310 du terminal 300 de Bob en parallèle par exemple des étapes H10 et H20, ou à un autre moment précédant la réception de la requête d'appel provenant d'Alice.

Le navigateur 310 de Bob répond à la requête d'appel d'Alice en envoyant le certificat Ass(MinIDB) de son identité minimaliste et une empreinte FPB d'une clé publique PKB appartenant à une paire de clés asymétriques attribuée de façon unique à Bob par son fournisseur d'identités 400/Bob (étape H70). Cette paire de clés asymétriques comprend également une clé secrète SKB associée à la clé publique PKB.

La réponse du navigateur 310 transite par le serveur web 500 et est routée par celui-ci jusqu'au navigateur 210 d'Alice (étape H80).

Sur réception de la réponse de Bob, le navigateur 210 d'Alice, par le biais de son module 220, envoie une requête au fournisseur d'identités 400/Bob de Bob pour obtenir la clé publique PKB de Bob (étape H90). Il joint à cet effet dans sa requête le certificat d'identité minimaliste Ass(MinIDB) de Bob reçu à l'étape H80.

Sur réception de la requête, le fournisseur d'identités 400/Bob extrait du certificat Ass(MinIDB) l'identité minimaliste MinIDB et utilise cette identité minimaliste pour retrouver la clé publique PKB de Bob.

La clé publique PKB de Bob requise par le navigateur 210 d'Alice appartient, comme mentionné précédemment, à une paire de clés asymétrique attribuée préalablement par le fournisseur d'identités 400/Bob à Bob. Il convient de noter que cette paire de clés peut être différente de la paire de clés attribuée à Bob pour communiquer directement de façon sécurisée avec Alice selon le protocole DTLS.

La clé publique PKB constitue une donnée DB caractéristique de Bob au sens de l'invention, en ce sens qu'elle est allouée de façon unique à Bob et l'identifie de manière non équivoque.

Elle est envoyée par le fournisseur d'identités 400/Bob au navigateur 210 d'Alice (étape H100).

Le module 230 d'association du navigateur 210 d'Alice associe la clé publique PKB (donnée caractéristique de Bob) reçue du fournisseur d'identités 400/Bob à l'identité d'Alice IDA (ou de façon équivalente à son certificat Ass(IDA)) dans la mémoire MEM du terminal 200 (étape H110).

Puis il chiffre l'identité IDA d'Alice (plus précisément son certificat Ass(IDA) ici qui contient l'identité IDA) avec la clé publique PKB de Bob en utilisant un algorithme de chiffrement prédéfini. On désigne par PKB(Ass(IDA)), le certificat d'identité Ass(IDA) d'Alice chiffré à l'aide de la clé publique PKB de Bob.

En variante, le module 230 chiffre uniquement l'identité IDA d'Alice plutôt que son certificat.

De façon similaire, suite à la réception de la requête d'appel d'Alice, le navigateur 310 de Bob, par le biais de son module 320, envoie une requête au fournisseur d'identités 400/Alice d'Alice pour obtenir la clé publique PKA d'Alice (étape H120). Il joint à cet effet dans sa requête le certificat d'identité minimaliste Ass(MinIDA) d'Alice reçue à l'étape H40.

Sur réception de la requête, le fournisseur d'identités 400/Alice extrait du certificat Ass(MinIDA) l'identité minimaliste MinIDA et utilise cette identité minimaliste pour retrouver la clé publique PKA d'Alice.

Comme mentionné précédemment, la clé publique PKA d'Alice requise par le navigateur 310 appartient à une paire de clés asymétrique attribuée préalablement par le fournisseur d'identités 400/Alice à Alice. Il convient de noter que cette paire de clés peut être différente de la paire de clés attribuée à Alice pour communiquer directement de façon sécurisée avec Bob selon le protocole DTLS.

La clé publique PKA constitue une donnée DA caractéristique d'Alice au sens de l'invention, en ce sens qu'elle est allouée de façon unique à Alice et l'identifie de manière non équivoque.

Elle est envoyée par le fournisseur d'identités 400/Alice au navigateur 310 de Bob (étape H130).

Le module 330 d'association du navigateur 310 de Bob associe alors la clé publique PKA (donnée caractéristique d'Alice) reçue du fournisseur d'identités 400/Alice à l'identité de Bob IDB (ou de façon équivalente à son certificat Ass(IDB)) dans la mémoire MEM du terminal 300 (étape H140).

Puis il chiffre l'identité IDB de Bob (plus précisément son certificat Ass(IDB) ici qui contient l'identité IDB) avec la clé publique PKA d'Alice en utilisant un algorithme de chiffrement prédéfini. On désigne par PKA(Ass(IDB)), le certificat d'identité Ass(IDB) de Bob chiffré à l'aide de la clé publique PKA d'Alice.

En variante, le module 330 chiffre uniquement l'identité IDB de Bob plutôt que son certificat.

Il convient de noter que les étapes H90-H110 et H120-H140 peuvent être menées en parallèle par les navigateurs 210 et 310 respectivement.

Le navigateur 210 d'Alice envoie alors au navigateur 310 de Bob, par l'intermédiaire de son module 240, une requête d'appel comprenant le certificat d'identité Ass(IDA) d'Alice chiffrée avec la clé publique PKB de Bob, c'est-à-dire le message PKB(Ass(IDA)) (étape H150).

Cette requête transite par le serveur web 500 et est routée par celui-ci vers le navigateur 310 de Bob (étape H160). Toutefois, le serveur web 500 ne détenant pas la clé privée SKB de Bob, il ne peut accéder au certificat Ass(IDA) et donc à l'identité IDA contenue dans la requête. Seul Bob peut accéder à l'identité IDA contenue dans la requête en déchiffrant le message PKB(Ass(IDA)) à l'aide de sa clé secrète SKB.

Autrement dit, l'étape d'envoi par le navigateur 210 d'Alice du message chiffré PKB(Ass(IDA)) constitue une étape de mise à disposition de Bob de l'identité d'Alice au sens de l'invention, la condition selon laquelle Bob doit détenir une donnée (en l'occurrence la clé privée SKB) correspondant à la donnée caractéristique DB (i.e. la clé publique PKB) enregistrée par le navigateur 210 en association avec l'identité IDA étant vérifiée.

Sur réception de la requête d'appel du navigateur 210, le navigateur 310 par l'intermédiaire de son module 350, déchiffre le message PKB(Ass(IDA)) en utilisant la clé secrète de Bob SKB et obtient ainsi l'identité IDA d'Alice (étape H170).

Il envoie en réponse à la requête d'appel d'Alice, par l'intermédiaire de son module 340, le message PKA(Ass(IDB)) correspondant au certificat d'identité de Bob chiffré avec la clé publique d'Alice (étape H180).

Ce message de réponse transite par le serveur web 500 qui le route vers le navigateur 210 du terminal 200 d'Alice (étape H190). De nouveau, le serveur web 500 ne disposant pas de la clé privée d'Alice n'a pas accès au certificat Ass(IDB) et donc à l'identité IDB véhiculée dans le message de réponse.

Sur réception du message de réponse, le navigateur 210 par l'intermédiaire de son module 250, déchiffre le message chiffré PKA(Ass(IDB)) en utilisant la clé secrète d'Alice SKA et obtient ainsi l'identité IDB de Bob (étape H200).

Suite à cet échange d'identités, un canal de communication direct et sécurisé est initié entre les navigateurs 210 et 310 (étape H210). Ce canal s'appuie sur le protocole DTLS.

Il convient de noter que l'échange d'identités IDA et IDB entre les utilisateurs Alice et Bob peut avoir lieu alternativement alors que le canal sécurisé est déjà établi entre ces utilisateurs.

Ce second mode de réalisation offre donc un mécanisme d'échange sécurisé des identités d'Alice et de Bob compatible avec l'utilisation d'un protocole SSO à fourniture d'identité immédiate tel que le protocole BrowserID.

Dans les deux modes de réalisation décrits ici, l'identité d'Alice (respectivement de Bob) est associée au niveau de l'entité de confiance 40 ou du navigateur d'Alice (respectivement de Bob) à une donnée caractéristique de Bob (respectivement d'Alice), telle une clé publique de chiffrement. Dans une variante de réalisation, l'identité d'Alice (respectivement de Bob) peut également être associée, en plus de la donnée caractéristique de Bob (respectivement d'Alice) à un identifiant de la communication entre Alice et Bob et/ou à tout autre paramètre lié à cette communication. De cette sorte, la mise à disposition de l'identité d'Alice (respectivement de Bob) peut être en outre conditionnée par la fourniture de l'identifiant de la communication, afin de renforcer encore davantage la sécurité du mécanisme d'échange d'identités entre Alice et Bob.

## Revendications

1. Procédé de gestion d'une identité (IDA,IDB) d'un premier utilisateur destiné à être mis en œuvre lors d'une communication entre un premier navigateur web (21,31;210,310) installé sur un terminal (20,30;200,300) du premier utilisateur et un deuxième navigateur web (31,21;310,210) installé sur un terminal (30,20;300,200) d'un deuxième utilisateur, le procédé de gestion comprenant :
- une étape d'obtention (G90,G40;H130,H100) par le premier utilisateur d'au moins une première donnée (DB,DA) caractéristique du deuxième utilisateur, ladite au moins une première donnée caractéristique (DB,DA) du deuxième utilisateur étant une clé publique (PKB,PKA) d'une paire de clés publique et secrète attribuée au deuxième utilisateur ;
- une étape d'association (G140,G160;H200,H170) d'une identité (IDA,IDB) du premier utilisateur avec ladite au moins une première donnée (DB,DA) caractéristique du deuxième utilisateur ; et
- une étape de mise à disposition (G220,G260;H150,H180) du deuxième utilisateur de l'identité du premier utilisateur (IDA,IDB) associée à ladite au moins une première donnée caractéristique à condition que le deuxième utilisateur détienne au moins une deuxième donnée (SKB,SKA) correspondant à la première donnée caractéristique du deuxième utilisateur.

2. Procédé de gestion selon la revendication 1 dans lequel au cours de l'étape d'association (G140,G160;H200,H170), l'identité du premier utilisateur est en outre associée à un identifiant de la communication.

3. Procédé de gestion selon la revendication 1 ou 2 dans laquelle l'identité du premier utilisateur mise à disposition du deuxième utilisateur dépend du deuxième utilisateur.

4. Procédé de gestion selon l'une quelconque des revendications 1 à 3 dans lequel l'étape d'obtention (G80,G40) est mise en oeuvre par le premier navigateur (21,31) et les étapes d'association (G140,G160) et de mise à disposition (G220,G260) sont mises en oeuvres par une entité de confiance (40) apte à authentifier le premier utilisateur.

5. Procédé de gestion selon la revendication 4 dans lequel :
- ladite au moins une première donnée caractéristique (DB,DA) du deuxième utilisateur est une clé publique (PKB,PKA) d'une paire de clés publique et secrète attribuée au deuxième utilisateur, cette clé publique étant obtenue par le premier navigateur (21,31) du deuxième navigateur (31,21) ; et
- l'étape de mise à disposition (G220,G260) comprend l'envoi par l'entité de confiance (40) au deuxième navigateur (31,21) de l'identité (IDA,IDB) du premier utilisateur suite à la réception (G200,G240) par l'entité de confiance (40) d'une preuve d'authentification (CODA,CODB) du premier utilisateur signée par le deuxième navigateur en utilisant la clé privée (SKB,SKA) de la paire de clés attribuée au deuxième utilisateur.

6. Procédé de gestion selon l'une quelconque des revendications 1 à 3 dans lequel les étapes d'obtention (H130,H100), d'association (H200,H170) et de mise à disposition (H150,H180) sont mises en oeuvre par le premier navigateur (210,310).

7. Procédé de gestion selon la revendication 6 dans lequel :
- ladite au moins une première donnée caractéristique (DB,DA) du deuxième utilisateur est une clé publique (PKB,PKA) d'une paire de clés publique et secrète attribuée au deuxième utilisateur, cette clé publique étant obtenue par le premier navigateur (210,310) d'une entité de confiance (40) ayant authentifié le deuxième utilisateur ;
- l'étape d'association (H200,H170) comprend le chiffrement par le premier navigateur (210,310) de l'identité (IDA,IDB) du premier utilisateur en utilisant cette clé publique (PKA,PKB) du deuxième utilisateur ; et
- l'étape de mise à disposition (H150,H180) comprend l'envoi par le navigateur (210,310) au deuxième navigateur (310,210) de l'identité ainsi chiffrée (PKB(Ass(IDA)),PKA(Ass(IDB))).

8. Procédé de communication d'un premier navigateur web (21,31) installé sur un terminal (20,30) d'un premier utilisateur avec une entité de confiance (40), destiné à être mis en oeuvre lors d'une communication entre le premier navigateur web et un deuxième navigateur web (31,21) installé sur un terminal (30,20) d'un deuxième utilisateur, le procédé de communication comprenant :
- une étape d'obtention (G100,G90) par le premier navigateur web en provenance du deuxième navigateur web, d'au moins une première donnée (DB,DA) caractéristique du deuxième utilisateur, ladite au moins une première donnée caractéristique (DB,DA) du deuxième utilisateur étant une clé publique (PKB,PKA) d'une paire de clés publique et secrète attribuée au deuxième utilisateur ; et
- une étape de communication (G130,G160) du premier navigateur web (21,31) avec l'entité de confiance (40) pour associer auprès de l'entité de confiance une identité (IDA,IDB) du premier utilisateur avec ladite au moins une première donnée caractéristique (DB,DA) du deuxième utilisateur.

9. Procédé de communication selon la revendication 8 dans lequel l'identité du premier utilisateur associée auprès de l'entité de confiance à ladite au moins une première donnée caractéristique du deuxième utilisateur est distincte d'une identité du premier utilisateur utilisée lors de l'authentification du premier utilisateur par l'entité de confiance.

10. Procédé de mise à disposition d'une identité (IDA,IDB) d'un premier utilisateur par une entité de confiance (40) destiné à être mis en oeuvre lors d'une communication entre un premier navigateur web (21,31) installé sur un terminal (20,30) du premier utilisateur et un deuxième navigateur web (31,21) installé sur un terminal (30,20) d'un deuxième utilisateur, le procédé de mise à disposition comprenant :
- une étape d'association (G140,G170) par l'entité de confiance d'une identité (IDA,IDB) du premier utilisateur avec au moins une première donnée caractéristique (DB,DA) du deuxième utilisateur, ladite au moins une première donnée caractéristique (DB,DA) du deuxième utilisateur étant une clé publique (PKB,PKA) d'une paire de clés publique et secrète attribuée au deuxième utilisateur ; et
- suite à la réception (G200,G240) par l'entité de confiance d'une preuve que le deuxième utilisateur détient au moins une deuxième donnée correspondant à la première donnée caractéristique du deuxième utilisateur, une étape de mise à disposition (G220,G260) du deuxième utilisateur de l'identité du premier utilisateur associée à ladite au moins une première donnée caractéristique du deuxième utilisateur.

11. Procédé d'obtention d'une identité (IDA,IDB) d'un premier utilisateur destiné à être mis en oeuvre lors d'une communication entre un premier navigateur web (21,31) installé sur un terminal (20,30) du premier utilisateur et un deuxième navigateur web (31,21) installé sur un terminal (30,20) d'un deuxième utilisateur, le procédé comprenant :
- une étape de fourniture (G90,G100) par le deuxième navigateur au premier navigateur d'au moins une première donnée caractéristique (DB,DA) du deuxième utilisateur, ladite au moins une première donnée caractéristique (DB,DA) du deuxième utilisateur étant une clé publique (PKB,PKA) d'une paire de clés publique et secrète attribuée au deuxième utilisateur ;
- une étape de fourniture (G200,G240) par le deuxième navigateur à l'entité de confiance, d'une preuve que le deuxième utilisateur détient au moins une deuxième donnée (SKB,SKA) correspondant à la première donnée caractéristique (DB,DA) du deuxième utilisateur ; et
- une étape de réception (G220,G260) par le deuxième navigateur en provenance d'une entité de confiance apte à authentifier le premier utilisateur d'une identité du premier utilisateur associée auprès de l'entité de confiance à la première donnée caractéristique du deuxième utilisateur.

12. Système (205) de gestion d'une identité (IDA,IDB) d'un premier utilisateur comprenant une pluralité de modules activés lors d'une communication entre un premier navigateur web (21,31;210,310) installé sur un terminal du premier utilisateur et un deuxième navigateur web (31,21;310,210) installé sur un terminal d'un deuxième utilisateur, ladite pluralité de modules comprenant :
- un module (22,32;220,320), embarqué dans le terminal du premier utilisateur, d'obtention d'au moins une première donnée caractéristique du deuxième utilisateur, ladite au moins une première donnée caractéristique (DB,DA) du deuxième utilisateur étant une clé publique (PKB,PKA) d'une paire de clés publique et secrète attribuée au deuxième utilisateur ;
- un module d'association (42;230,330) d'une identité (IDA,IDB) du premier utilisateur avec ladite au moins une première donnée caractéristique (DB,DA) du deuxième utilisateur ; et
- un module de mise à disposition (43;240,340) du deuxième utilisateur de l'identité du premier utilisateur associée à ladite au moins une première donnée caractéristique à condition que le deuxième utilisateur détienne au moins une deuxième donnée correspondant à la première donnée caractéristique du deuxième utilisateur.

13. Terminal (200,300) d'un premier utilisateur équipé d'un premier navigateur web (210,310) comprenant un système de gestion (205,305) d'une identité (IDA,IDB) du premier utilisateur selon la revendication 12.

14. Terminal (20,30) d'un premier utilisateur équipé d'un premier navigateur web (21,31) et d'une pluralité de modules activés lors d'une communication entre le premier navigateur web et un deuxième navigateur web (31,21) installé sur un terminal d'un deuxième utilisateur, ladite pluralité de modules étant commandés par le premier navigateur web et comprenant :
- un module d'obtention (22) d'au moins une première donnée caractéristique du deuxième utilisateur en provenance du deuxième navigateur web, ladite au moins une première donnée caractéristique (DB,DA) du deuxième utilisateur étant une clé publique (PKB,PKA) d'une paire de clés publique et secrète attribuée au deuxième utilisateur ; et
- un module de communication (23) avec l'entité de confiance pour associer auprès d'une entité de confiance apte à authentifier le premier utilisateur une identité du premier utilisateur avec ladite au moins une première donnée caractéristique du deuxième utilisateur.

15. Entité de confiance (40) comprenant une pluralité de modules activés lors d'une communication entre un premier navigateur web installé sur un terminal du premier utilisateur et un deuxième navigateur web installé sur un terminal d'un deuxième utilisateur, ladite pluralité de modules comprenant :
- un module d'association (42) d'une identité du premier utilisateur avec au moins une première donnée caractéristique du deuxième utilisateur, ladite au moins une première donnée caractéristique (DB,DA) du deuxième utilisateur étant une clé publique (PKB,PKA) d'une paire de clés publique et secrète attribuée au deuxième utilisateur ; et
- un module (43), activé suite à la réception par l'entité de confiance d'une preuve que le deuxième utilisateur détient au moins une deuxième donnée correspondant à la première donnée caractéristique du deuxième utilisateur, configuré pour mettre à disposition du deuxième utilisateur l'identité du premier utilisateur associée à ladite au moins une première donnée caractéristique du deuxième utilisateur.

16. Terminal (31,21) apte à obtenir une identité (IDA,IDB) d'un premier utilisateur lors d'une communication entre un premier navigateur web (21,31) installé sur un terminal du premier utilisateur et un deuxième navigateur web (31,21) installé sur ledit terminal, ledit terminal comprenant une pluralité de modules commandés par le deuxième navigateur et comprenant :
- un module de fourniture (34,24) au premier navigateur d'au moins une première donnée caractéristique d'un deuxième utilisateur, ladite au moins une première donnée caractéristique (DB,DA) du deuxième utilisateur étant une clé publique (PKB,PKA) d'une paire de clés publique et secrète attribuée au deuxième utilisateur ;
- un module de fourniture (35,25) à une entité de confiance apte à authentifier le premier utilisateur d'une preuve que le deuxième utilisateur détient au moins une deuxième donnée correspondant à la première donnée caractéristique du deuxième utilisateur ; et
- un module de réception (36,26) en provenance de l'entité de confiance d'une identité du premier utilisateur associée auprès de l'entité de confiance à la première donnée caractéristique du deuxième utilisateur.

17. Système de communication (100) comprenant :
- un terminal (200,300) d'un premier utilisateur sur lequel est installé un premier navigateur web (210,310) et conforme à la revendication 16 ; et
- un terminal (300,200) d'un deuxième utilisateur sur lequel est installé un deuxième navigateur web (310,210), apte à accéder à une identité (IDA,IDB) du premier utilisateur mise à disposition par le terminal du premier utilisateur.

## Patentansprüche

1. Verfahren zur Verwaltung einer Identität (IDA, IDB) eines ersten Benutzers, das dazu bestimmt ist, bei einer Kommunikation zwischen einem auf einem Endgerät (20, 30; 200, 300) des ersten Benutzers installierten ersten Webbrowser (21, 31; 210, 310) und einem auf einem Endgerät (30, 20; 300, 200) eines zweiten Benutzers installierten zweiten Webbrowser (31, 21; 310, 210) durchgeführt zu werden, wobei das Verwaltungsverfahren enthält:
- einen Schritt der Erlangung (G90, G40; H130, H100) durch den ersten Benutzer mindestens eines ersten charakteristischen Datenwerts (DB, DA) des zweiten Benutzers, wobei der mindestens eine erste charakteristische Datenwert (DB, DA) des zweiten Benutzers ein öffentlicher Schlüssel (PKB, PKA) eines dem zweiten Benutzer zugeteilten Paars von öffentlichem und geheimem Schlüssel ist;
- einen Schritt der Verknüpfung (G140, G160; H200, H170) einer Identität (IDA, IDB) des ersten Benutzers mit dem mindestens einen ersten charakteristischen Datenwert (DB, DA) des zweiten Benutzers; und
- einen Schritt, dem zweiten Benutzer die mit dem mindestens einen ersten charakteristischen Datenwert verknüpfte Identität des ersten Benutzers (IDA, IDB) zur Verfügung zu stellen (G220, G260; H150, H180), vorausgesetzt, der zweite Benutzer besitzt mindestens einen zweiten Datenwert (SKB, SKA) entsprechend dem ersten charakteristischen Datenwert des zweiten Benutzers.

2. Verwaltungsverfahren nach Anspruch 1, wobei die Identität des ersten Benutzers während des Verknüpfungsschritts (G140, G160; H200, H170) außerdem mit einer Kennung der Kommunikation verknüpft wird.

3. Verwaltungsverfahren nach Anspruch 1 oder 2, wobei die dem zweiten Benutzer zur Verfügung gestellte Identität des ersten Benutzers vom zweiten Benutzer abhängt.

4. Verwaltungsverfahren nach einem der Ansprüche 1 bis 3, wobei der Erlangungsschritt (G80, G40) vom ersten Browser (21, 31) durchgeführt wird, und die Schritte der Verknüpfung (G140, G160) und der Zurverfügungstellung (G220, G260) von einer Vertrauensentität (40) durchgeführt werden, die den ersten Benutzer authentifizieren kann.

5. Verwaltungsverfahren nach Anspruch 4, wobei:
- der mindestens eine erste charakteristische Datenwert (DB, DA) des zweiten Benutzers ein öffentlicher Schlüssel (PKB, PKA) eines dem zweiten Benutzer zugeteilten Paars von öffentlichem und geheimem Schlüssel ist, wobei dieser öffentliche Schlüssel durch den ersten Browser (21, 31) vom zweiten Browser (31, 21) erlangt wird; und
- der Schritt der Zurverfügungstellung (G220, G260) das Senden durch die Vertrauensentität (40) an den zweiten Browser (31, 21) der Identität (IDA, IDB) des ersten Benutzers nach dem Empfang (G200, G240) durch die Vertrauensentität (40) eines Authentifizierungsbeweises (CODA, CODB) des ersten Benutzers signiert vom zweiten Browser unter Verwendung des privaten Schlüssels (SKB, SKA) des dem zweiten Benutzer zugeteilten Paars von Schlüsseln enthält.

6. Verwaltungsverfahren nach einem der Ansprüche 1 bis 3, wobei die Schritte der Erlangung (H130, H100), der Verknüpfung (H200, H170) und der Zurverfügungstellung (H150, H180) vom ersten Browser (210, 310) durchgeführt werden.

7. Verwaltungsverfahren nach Anspruch 6, wobei:
- der mindestens eine erste charakteristische Datenwert (DB, DA) des zweiten Benutzers ein öffentlicher Schlüssel (PKB, PKA) eines dem zweiten Benutzer zugeteilten Paars von öffentlichem und geheimem Schlüssel ist, wobei dieser öffentliche Schlüssel durch den ersten Browser (210, 310) von einer Vertrauensentität (40) erlangt wird, die den zweiten Benutzer authentifiziert hat;
- der Verknüpfungsschritt (H200, H170) die Verschlüsselung durch den ersten Browser (210, 310) der Identität (IDA, IDB) des ersten Benutzers unter Verwendung dieses öffentlichen Schlüssels (PKA, PKB) des zweiten Benutzers enthält; und
- der Schritt der Zurverfügungstellung (H150, H180) das Senden durch den Browser (210, 310) an den zweiten Browser (310, 210) der so verschlüsselten Identität (PKB(Ass(IDA)), PKA(Ass(IDB))) enthält.

8. Kommunikationsverfahren eines auf einem Endgerät (20, 30) eines ersten Benutzers installierten ersten Webbrowsers (21, 31) mit einer Vertrauensentität (40), das dazu bestimmt ist, bei einer Kommunikation zwischen dem ersten Webbrowser und einem auf einem Endgerät (30, 20) eines zweiten Benutzers installierten zweiten Webbrowser (31, 21) durchgeführt zu werden, wobei das Kommunikationsverfahren enthält:
- einen Schritt der Erlangung (G100, G90) durch den ersten Webbrowser vom zweiten Webbrowser mindestens eines ersten charakteristischen Datenwerts (DB, DA) des zweiten Benutzers, wobei der mindestens eine erste charakteristische Datenwert (DB, DA) des zweiten Benutzers ein öffentlicher Schlüssel (PKB, PKA) eines dem zweiten Benutzer zugeteilten Paars von öffentlichem und geheimem Schlüssel ist; und
- einen Schritt der Kommunikation (G130, G160) des ersten Webbrowsers (21, 31) mit der Vertrauensentität (40), um bei der Vertrauensentität eine Identität (IDA, IDB) des ersten Benutzers mit dem mindestens einen ersten charakteristischen Datenwert (DB, DA) des zweiten Benutzers zu verknüpfen.

9. Kommunikationsverfahren nach Anspruch 8, wobei die Identität des ersten Benutzers, die bei der Vertrauensentität mit dem mindestens einen ersten charakteristischen Datenwert des zweiten Benutzers verknüpft ist, sich von einer Identität des ersten Benutzers unterscheidet, die bei der Authentifizierung des ersten Benutzers durch die Vertrauensentität verwendet wurde.

10. Verfahren zur Zurverfügungstellung einer Identität (IDA, IDB) eines ersten Benutzers durch eine Vertrauensentität (40), das dazu bestimmt ist, bei einer Kommunikation zwischen einem auf einem Endgerät (20, 30) des ersten Benutzers installierten ersten Webbrowser (21, 31) und einem auf einem Endgerät (30, 20) eines zweiten Benutzers installierten zweiten Webbrowser (31, 21) durchgeführt zu werden, wobei das Zurverfügungstellungsverfahren enthält:
- einen Schritt der Verknüpfung (G140, G170) durch die Vertrauensentität einer Identität (IDA, IDB) des ersten Benutzers mit mindestens einem ersten charakteristischen Datenwert (DB, DA) des zweiten Benutzers, wobei der mindestens eine erste charakteristische Datenwert (DB, DA) des zweiten Benutzers ein öffentlicher Schlüssel (PKB, PKA) eines dem zweiten Benutzer zugeteilten Paars von öffentlichem und geheimem Schlüssel ist; und
- nach dem Empfang (G200, G240) durch die Vertrauensentität eines Beweises, dass der zweite Benutzer mindestens einen zweiten Datenwert besitzt, der dem ersten charakteristischen Datenwert des zweiten Benutzers entspricht, einen Schritt, dem zweiten Benutzer die Identität des ersten Benutzers, die mit dem mindestens einen ersten charakteristischen Datenwert des zweiten Benutzers verknüpft ist, zur Verfügung zu stellen (G220, G260).

11. Verfahren zur Erlangung einer Identität (IDA, IDB) eines ersten Benutzers, das dazu bestimmt ist, bei einer Kommunikation zwischen einem auf einem Endgerät (20, 30) des ersten Benutzers installierten ersten Webbrowser (21, 31) und einem auf einem Endgerät (30, 20) eines zweiten Benutzers installierten zweiten Webbrowser (31, 21) durchgeführt zu werden, wobei das Verfahren enthält:
- einen Schritt des Lieferns (G90, G100) durch den zweiten Browser an den ersten Browser mindestens eines ersten charakteristischen Datenwerts (DB, DA) des zweiten Benutzers, wobei der mindestens eine erste charakteristische Datenwert (DB, DA) des zweiten Benutzers ein öffentlicher Schlüssel (PKB, PKA) eines dem zweiten Benutzer zugeteilten Paars von öffentlichem und geheimem Schlüssel ist;
- einen Schritt des Lieferns (G200, G240) durch den zweiten Browser an die Vertrauensentität eines Beweises, dass der zweite Benutzer mindestens einen zweiten Datenwert (SKB, SKA) entsprechend dem ersten charakteristischen Datenwert (DB, DA) des zweiten Benutzers besitzt; und
- einen Schritt des Empfangs (G220, G260) durch den zweiten Browser von einer Vertrauensentität, die den ersten Benutzer authentifizieren kann, einer Identität des ersten Benutzers, die bei der Vertrauensentität mit dem ersten charakteristischen Datenwert des zweiten Benutzers verknüpft ist.

12. System (205) zur Verwaltung einer Identität (IDA, IDB) eines ersten Benutzers, das eine Vielzahl von Modulen enthält, die bei einer Kommunikation zwischen einem auf einem Endgerät des ersten Benutzers installierten ersten Webbrowser (21, 31; 210, 310) und einem auf einem Endgerät eines zweiten Benutzers installierten zweiten Webbrowser (31, 21; 310, 210) aktiviert werden, wobei die Vielzahl von Modulen enthält:
- ein Modul (22, 32; 220, 320) an Bord des Endgeräts des ersten Benutzers zum Erlangen mindestens eines ersten charakteristischen Datenwerts des zweiten Benutzers, wobei der mindestens eine erste charakteristische Datenwert (DB, DA) des zweiten Benutzers ein öffentlicher Schlüssel (PKB, PKA) eines dem zweiten Benutzer zugeteilten Paars von öffentlichem und geheimem Schlüssel ist;
- ein Modul zur Verknüpfung (42; 230, 330) einer Identität (IDA, IDB) des ersten Benutzers mit dem mindestens einen ersten charakteristischen Datenwert (DB, DA) des zweiten Benutzers; und
- ein Modul, um dem zweiten Benutzer die mit dem mindestens einen ersten charakteristischen Datenwert verknüpfte Identität des ersten Benutzers unter der Voraussetzung zur Verfügung zu stellen (43; 240, 340), dass der zweite Benutzer mindestens einen zweiten Datenwert entsprechend dem ersten charakteristischen Datenwert des zweiten Benutzers besitzt.

13. Endgerät (200, 300) eines ersten Benutzers, das mit einem ersten Webbrowser (210, 310) ausgestattet ist, das ein Verwaltungssystem (205, 305) einer Identität (IDA, IDB) des ersten Benutzers nach Anspruch 12 enthält.

14. Endgerät (20, 30) eines ersten Benutzers, das mit einem ersten Webbrowser (21, 31) und einer Vielzahl von Modulen ausgestattet ist, die bei einer Kommunikation zwischen dem ersten Webbrowser und einem auf einem Endgerät eines zweiten Benutzers installierten zweiten Webbrowser (31, 21) aktiviert werden, wobei die Vielzahl von Modulen vom ersten Webbrowser gesteuert wird und enthält:
- ein Modul zur Erlangung (22) mindestens eines ersten charakteristischen Datenwerts des zweiten Benutzers vom zweiten Webbrowser, wobei der mindestens eine erste charakteristische Datenwert (DB, DA) des zweiten Benutzers ein öffentlicher Schlüssel (PKB, PKA) eines dem zweiten Benutzer zugeteilten Paars von öffentlichem und geheimem Schlüssel ist; und
- ein Modul zur Kommunikation (23) mit der Vertrauensentität, um bei einer Vertrauensentität, die den ersten Benutzer authentifizieren kann, eine Identität des ersten Benutzers mit dem mindestens einen ersten charakteristischen Datenwert des zweiten Benutzers zu verknüpfen.

15. Vertrauensentität (40), die eine Vielzahl von Modulen enthält, die bei einer Kommunikation zwischen einem auf einem Endgerät des ersten Benutzers installierten ersten Webbrowser und einem auf einem Endgerät eines zweiten Benutzers installierten zweiten Webbrowser aktiviert werden, wobei die Vielzahl von Modulen enthält:
- ein Modul zur Verknüpfung (42) einer Identität des ersten Benutzers mit mindesten einem ersten charakteristischen Datenwert des zweiten Benutzers, wobei der mindestens eine erste charakteristische Datenwert (DB, DA) des zweiten Benutzers ein öffentlicher Schlüssel (PKB, PKA) eines dem zweiten Benutzer zugeteilten Paars von öffentlichem und geheimem Schlüssel ist; und
- ein Modul (43), das nach dem Empfang durch die Vertrauensentität eines Beweises, dass der zweite Benutzer mindestens einen zweiten Datenwert besitzt, der dem ersten charakteristischen Datenwert des zweiten Benutzers entspricht, aktiviert wird, das konfiguriert ist, dem zweiten Benutzer die mit dem mindestens einen ersten charakteristischen Datenwert des zweiten Benutzers verknüpfte Identität des ersten Benutzers zur Verfügung zu stellen.

16. Endgerät (31, 21), das eine Identität (IDA, IDB) eines ersten Benutzers bei einer Kommunikation zwischen einem auf einem Endgerät des ersten Benutzers installierten ersten Webbrowser (21, 31) und einem auf dem Endgerät installierten zweiten Webbrowser (31, 21) erlangen kann, wobei das Endgerät eine Vielzahl von Modulen enthält, die vom zweiten Browser gesteuert werden und enthalten:
- ein Modul zum Liefern (34, 24) an den ersten Browser mindestens eines ersten charakteristischen Datenwerts eines zweiten Benutzers, wobei der mindestens eine charakteristische Datenwert (DB, DA) des zweiten Benutzers ein öffentlicher Schlüssel (PKB, PKA) eines dem zweiten Benutzer zugeteilten Paars von öffentlichem und geheimem Schlüssel ist;
- ein Modul zum Liefern (35, 25) an eine Vertrauensentität, die den ersten Benutzer authentifizieren kann, eines Beweises, dass der zweite Benutzer mindestens einen zweiten Datenwert besitzt, der dem ersten charakteristischen Datenwert des zweiten Benutzers entspricht; und
- ein Modul zum Empfang (36, 26) von der Vertrauensentität einer Identität des ersten Benutzers, die bei der Vertrauensentität mit dem ersten charakteristischen Datenwert des zweiten Benutzers verknüpft ist.

17. Kommunikationssystem (100), das enthält:
- ein Endgerät (200, 300) eines ersten Benutzers, auf dem ein erster Webbrowser (210, 310) installiert ist und das Anspruch 16 entspricht; und
- ein Endgerät (300, 200) eines zweiten Benutzers, auf dem ein zweiter Webbrowser (310, 210) installiert ist, der auf eine Identität (IDA, IDB) des ersten Benutzers zugreifen kann, die vom Endgerät des ersten Benutzers zur Verfügung gestellt wird.

## Claims

1. Method for managing an identity (IDA,IDB) of a first user, intended to be implemented during a communication between a first web browser (21,31;210,310) installed on a terminal (20,30;200,300) of the first user and a second web browser (31,21;310,210) installed on a terminal (30,20;300,200) of a second user, the managing method comprising:
- a step (G90,G40;H130,H100) in which the first user obtains at least one first datum (DB,DA) characteristic of the second user, said at least one first datum (DB,DA) characteristic of the second user being a public key (PKB,PKA) of a pair of public and secret keys attributed to the second user;
- a step (G140,G160;H200,H170) in which an identity (IDA,IDB) of the first user is associated with said at least one first datum (DB,DA) characteristic of the second user;and
- a step (G220,G260;H150,H180) in which the identity of the first user (IDA,IDB) associated with said at least one characteristic first datum is made available to the second user provided that the second user is in possession of at least one second datum (SKB,SKA) corresponding to the first datum characteristic of the second user.

2. Managing method according to Claim 1, wherein, in the associating step (G140,G160;H200,H170), the identity of the first user is furthermore associated with an identifier of the communication.

3. Managing method according to Claim 1 or 2, wherein the identity of the first user made available to the second user depends on the second user.

4. Managing method according to any one of Claims 1 to 3, wherein the obtaining step (G80,G40) is implemented by the first browser (21,31) and the associating step (G140,G160) and providing step (G220,G260) are implemented by a trusted entity (40) able to authenticate the first user.

5. Managing method according to Claim 4, wherein:
- said at least one first datum (DB,DA) characteristic of the second user is a public key (PKB,PKA) of a pair of public and secret keys attributed to the second user, this public key being obtained by the first browser (21,31) from the second browser (31,21); and
- the providing step (G220,G260) comprises the trusted entity (40) sending to the second browser (31,21) the identity (IDA,IDB) of the first user following reception (G200,G240) by the trusted entity (40) of a proof (CODA,CODB) of authentication of the first user signed by the second browser using the private key (SKB,SKA) of the pair of keys attributed to the second user.

6. Managing method according to any one of Claims 1 to 3, wherein the obtaining step (H130,H100) associating step (H200,H170) and providing step (H150,H180) are implemented by the first browser (210,310).

7. Managing method according to Claim 6, wherein:
- said at least one first datum (DB,DA) characteristic of the second user is a public key (PKB,PKA) of a pair of public and secret keys attributed to the second user, this public key being obtained by the first browser (210,310) from a trusted entity (40) having authenticated the second user;
- the associating step (H200,H170) comprises the first browser (210,310) encrypting the identity (IDA,IDB) of the first user using this public key (PKB,PKA) of the second user; and
- the providing step (H150,H180) comprises the browser (210,310) sending, to the second browser (310,210) the identity thus encrypted (PKB(Ass(IDA)),PKA(Ass(IDB)).

8. Method of communication by a first web browser (21,31) installed on a terminal (20,30) of a first user with a trusted entity (40), intended to be implemented during a communication between the first web browser and a second web browser (31,21) installed on a terminal (30,20) of a second user, the communication-enabling method comprising:
- a step (G100,G90) in which the first web browser obtains, from the second web browser, at least one first datum (DB,DA) characteristic of the second user, said at least one first datum (DB,DA) characteristic of the second user being a public key (PKB,PKA) of a pair of public and secret keys attributed to the second user; and
- a step (G130,G160) in which the first web browser (21, 31) communicates with the trusted entity (40) with a view to getting the trusted entity to associate an identity (IDA,IDB) of the first user with said at least one first datum (DB,DA) characteristic of the second user.

9. Communication method according to Claim 8, wherein the identity of the first user associated by the trusted entity with said at least one first datum characteristic of the second user is different from an identity of the first user used during the authentication of the first user by the trusted entity.

10. Method for a trusted entity (40) making available an identity (IDA,IDB) of a first user, intended to be implemented during a communication between a first web browser (21,31) installed on a terminal (20,30) of the first user and a second web browser (31,21) installed on a terminal (30,20) of a second user, this providing method comprising:
- a step (G140,G170) in which an identity (IDA,IDB) of the first user is associated, by the trusted entity, with at least one first datum (DB,DA) characteristic of the second user, said at least one first datum (DB,DA) characteristic of the second user being a public key (PKB,PKA) of a pair of public and secret keys attributed to the second user; and
- following reception (G200,G240) by the trusted entity of a proof that the second user is in possession of at least one second datum corresponding to the first datum characteristic of the second user, a step (G220,G260) in which the identity of the first user associated with said at least one first datum characteristic of the second user is made available to the second user.

11. Method for obtaining an identity (IDA,IDB) of a first user, intended to be implemented during a communication between a first web browser (21,31) installed on a terminal (20,30) of the first user and a second web browser (31, 21) installed on a terminal (30,20) of a second user, the method comprising:
- a step (G90,G100) in which the second browser delivers, to the first browser, at least one first datum (DB,DA) characteristic of the second user, said at least one first datum (DB,DA) characteristic of the second user being a public key (PKB,PKA) of a pair of public and secret keys attributed to the second user;
- a step (G200, G240) in which the second browser delivers, to the trusted entity, a proof that the second user is in possession of at least one second datum (SKB,SKA) corresponding to the first datum (DB,DA) characteristic of the second user; and
- a step (G220,G260) in which an identity of the first user associated by the trusted entity with the first datum characteristic of the second user is received by the second browser from a trusted entity able to authenticate the first user.

12. System (205) for managing an identity (IDA,IDB) of a first user, comprising a plurality of modules that are activated during a communication between a first web browser (21,31;210,310) installed on a terminal of the first user and a second web browser (31,21;310,210) installed on a terminal of a second user, said plurality of modules comprising:
- a module (22,32;220,320), located on-board the terminal of the first user, for obtaining at least one first datum characteristic of the second user, said at least one first datum (DB,DA) characteristic of the second user being a public key (PKB,PKA) of a pair of public and secret keys attributed to the second user;
- a module (42;230,330) for associating an identity (IDA,IDB) of the first user with said at least one first datum (DB,DA) characteristic of the second user; and
- a module (43;240,340) for making the identity of the first user associated with said at least one characteristic first datum available to the second user provided that the second user is in possession of at least one second datum corresponding to the first datum characteristic of the second user.

13. Terminal (200,300) of a first user equipped with a first web browser (210,310) comprising a system (205,305) for managing an identity (IDA,IDB) of the first user according to Claim 12.

14. Terminal (20,30) of a first user equipped with a first web browser (21,31) and with a plurality of modules that are activated during a communication between the first web browser and a second web browser (31,21) installed on a terminal of a second user, said plurality of modules being controlled by the first web browser and comprising:
- a module (22) for obtaining at least one first datum characteristic of the second user from the second web browser, said at least one first datum (DB,DA) characteristic of the second user being a public key (PKB,PKA) of a pair of public and secret keys attributed to the second user; and
- a module (23) for communicating with the trusted entity with a view to getting a trusted entity able to authenticate the first user to associate an identity of the first user with said at least one first datum characteristic of the second user.

15. Trusted entity (40) comprising a plurality of modules that are activated during a communication between a first web browser installed on a terminal of the first user and a second web browser installed on a terminal of a second user, said plurality of modules comprising:
- a module (42) for associating an identity of the first user with at least one first datum characteristic of the second user, said at least one first datum (DB,DA) characteristic of the second user being a public key (PKB,PKA) of a pair of public and secret keys attributed to the second user; and
- a module (43), activated following reception by the trusted entity of a proof that the second user is in possession of at least one second datum corresponding to the first datum characteristic of the second user, configured to make the identity of the first user associated with said first datum characteristic of the second user available to the second user.

16. Terminal (31,21) able to obtain an identity (IDA,IDB) of a first user during a communication between a first web browser (21,31) installed on a terminal of the first user and a second web browser (31,21) installed on said terminal, said terminal comprising a plurality of modules controlled by the second browser and comprising:
- a module (34,24) for delivering, to the first browser, at least one first datum characteristic of a second user, said at least one first datum (DB,DA) characteristic of the second user being a public key (PKB,PKA) of a pair of public and secret keys attributed to the second user;
- a module (35,25) for delivering, to a trusted entity able to authenticate the first user, a proof that the second user is in possession of at least one second datum corresponding to the first datum characteristic of the second user; and
- a module (36,26) for receiving, from the trusted entity, an identity of the first user associated by the trusted entity with the first datum characteristic of the second user.

17. Communication system (100) comprising:
- a terminal (200,300) of a first user, on which is installed a first web browser (210,310) and according to Claim 16; and
- a terminal (300,200) of a second user, on which is installed a second web browser (310,210), able to accept and identity (IDA,IDB) of the first user provided by the terminal of the first user.
